(19) Europäisches Patentamt
European Patent Office
Office européen des brevets

(11) EP 3 164 432 B1

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **15732527.5**

(22) Anmeldetag: **12.06.2015**

(51) Int Cl.:
***C08F 222/10*** *(2006.01)* ***C04B 40/06*** *(2006.01)*

(86) Internationale Anmeldenummer:
**PCT/EP2015/001186**

(87) Internationale Veröffentlichungsnummer:
**WO 2016/000807 (07.01.2016 Gazette 2016/01)**

(54) **REAKTIVVERDÜNNER FÜR DIE CHEMISCHE BEFESTIGUNG**
REACTIVE DILUENT FOR THE CHEMICAL ANCHORING
DILUANT RÉACTIF POUR LA FIXATION CHIMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2014 DE 102014109355**

(43) Veröffentlichungstag der Anmeldung:
**10.05.2017 Patentblatt 2017/19**

(73) Patentinhaber: **fischerwerke GmbH & Co. KG**
**72178 Waldachtal (DE)**

(72) Erfinder:
- **GRÜN, Jürgen**
  **79268 Bötzingen (DE)**
- **VOGEL, Martin**
  **79286 Glottertal (DE)**
- **SCHLENK, Christian**
  **79211 Denzlingen (DE)**
- **HERBSTRITT, Yvonne**
  **79183 Waldkirch (DE)**
- **ANKERMANN, Carmen**
  **79211 Denzlingen (DE)**

(56) Entgegenhaltungen:
**WO-A1-2011/072789** **DE-A1-102012 221 446**
**DE-B3-102010 051 818**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 164 432 B1

## Beschreibung

Die Erfindung betrifft radikalisch härtbare Kunstharz-Befestigungssysteme, welche ein oder mehrere Reaktivverdünner ausgewählt aus radikalisch härtbaren Oligoalkylenglykoldi(meth) acrylaten und alkoxylierten Tri-, Tetra- oder Pentamethacrylaten beinhalten, wie jeweils in Anspruch 1 oder mindestens einem der abhängigen Ansprüche definiert, gegebenenfalls im dort genannten Fall b) jeweils mit den in Anspruch 1 spezifisch definierten Reaktiv-Kunstharzen, Verfahren zur Herstellung der Kunstharz-Befestigungssysteme wie in Anspruch 12 definiert, die Verwendung eines solchen Kunstharz-Befestigungssystems als Klebemittel in der Befestigungstechnik wie in Anspruch 11 definiert, und/oder Verfahren zur Befestigung von beispielsweise Verankerungsmitteln in Bohrlöchern oder Spalten unter Verwendung der Kunstharz-Befestigungssysteme, die mindestens einen dieser radikalisch härtbaren Reaktivverdünner beinhalten wie in Anspruch 13 definiert.

Vertrieb und Verkauf chemischer Befestigungssysteme unterliegt immer stärker dem Einfluss chemikalienrechtlicher Vorgaben und Beschränkungen. So bestehen in einigen Märkten bereits Verkaufseinschränkungen für Produkte mit bestimmter Kennzeichnung. Es gibt daher einen Bedarf für kennzeichnungsarme oder möglichst sogar kennzeichnungsfreie Befestigungssysteme. Um dem Rechnung zu tragen, ist die Bereitstellung geeigneter kennzeichnungsfreier Befestigungssysteme Aufgabe der vorliegenden Erfindung.

Ehylenglykoldi(meth)acrylat und Diethylenglykoldi(meth)acrylat sind bekannte Reaktivverdünner für radikalisch härtbare Harze in der Befestigungstechnik, beispielsweise aus der EP 2 513 007 A.

DE 10 2012 221 446 A1 beschreibt Harzmischungen auf Epoxy(meth)acrylatbasis mit acylierten Hydroxygruppen und deren Verwendung in der chemischen Befestigungstechnik. DE 10 2010 051 818 B3 betrifft Zwei-Komponenten-Mörtelmassen mit radikalisch polymerisierbarer Harzkomponente mit Reaktivverdünnern.

Es wurde nun gefunden, dass radikalisch härtbare Reaktivverdünner für radikalische Befestigungssysteme möglich sind, die auf Oligoalkylenglykoldi(meth)acrylaten (bevorzugt) oder alkoxylierten Tri-, Tetra- und Pentamethacrylaten, oder jeweils Mischungen von zwei oder mehr davon, wie in Anspruch 1 oder einem abhängigen Anspruch davon beschrieben, basieren.

Es wurde gefunden, dass bei schlechten Mischungsverhältnissen der erfindungsgemäßen Kunstharz-Befestigungssysteme während der Anwendung ein Optimum hinsichtlich der reaktivverdünnenden Wirkung, günstiger Kennzeichnung, akzeptablen mechanischem Parametern und guter Mischbarkeit bei nur in einem speziellen Bereich der Anzahl an Alkylenglykol-Wiederholeinheiten gegeben ist. Der Anteil an Alkylenglykoleinheiten liegt dabei im Durchschnitt je Molekül (Mittelwert) zwischen bei 4,2 bis 7, wie z.B zwischen 4,5 und 6.

Die erfindungsgemäßen bzw. erfindungsgemäß zu verwendenden Polyalkylenglykoldimethacrylate sind insbesondere mit einem mittleren Polymerisationsgrad und Polydispersität derart ausgewählt, dass nach der aktuell gültigen Rechtsgrundlage für die chemikalienrechtliche Einstufung als "reizend" oder "umweltgefährlich" (VERORDNUNG (EG) Nr. 1272/2008 über die Einstufung, Kennzeichnung und Verpackung von Stoffen und Gemischen, zur Änderung und Aufhebung der Richtlinien 67/548/EWG und 1999/45/EG und zur Änderung der Verordnung (EG) Nr. 1907/2006 - CLP-Verordnung)

- der mittlere Polymerisationsgrad n hoch genug ist, dass die unter Absatz 3.2 und 3.3 genannten Prüfungen bestanden werden, d.h. keine Reizwirkung in den Tests gemessen werden kann und somit keine Einstufung erfolgt UND
- der mittlere Polymerisationsgrad n tief genug ist, dass auch die im Anhang I, Teil 4 beschriebenen Test für die umweltgefährdende Wirkung bestanden werden und somit auch hier keine Einstufung erfolgt.

Überraschend haben sich die in Anspruch 1 oder einem der abhängigen Ansprüche genannten radikalisch härtbaren Oligoalkylenglykoldi(meth)acrylate (bevorzugt) oder alkoxylierten Tri-, Tetra- und Pentamethacrylaten als geeignet für diese Verwendung gezeigt und zeigen unerwartet gute mechanische Eigenschaften bei Verwendung in der Befestigungstechnik.

Vorzugsweise handelt es sich bei den genannten radikalisch härtbaren Oligoalkylenglykol-di(meth)acrylaten um solche der Formel I,

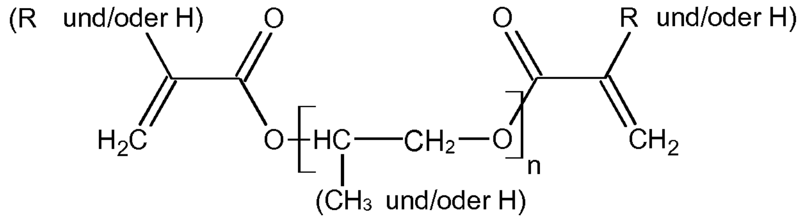

(I)

worin die Reste R unabhängig voneinander für $C_1$-$C_7$-Alkyl stehen, insbesondere für Methyl, und worin n für durchschnittlich 2,5 bis 13, vorzugsweise für 3,5 bis 10, insbesondere für 4 bis 8 und vor allem (bei Variante a) gemäß Anspruch 1 oder der ersten Ausführungsform der Erfindung unten ausschließlich) für 4,2 bis 7, insbesondere für 4,5 und 6 steht.

Beispiele für entsprechende Verbindungen sind insbesondere Triethylenglykoldi(meth)-acrylat (TIEGDMA), Tetraethylenglykoldi(meth)acrylat (TTEGDMA), Polyethylenglykol200-Di(meth)acrylat (PEG200DMA) (Mittelwert n $\approx$ 4,5, nur dies fällt unter Variante a) gemäß Anspruch 1 oder der ersten Ausführungsform der Erfindung unten) (am stärksten bevorzugt), Polyethylenglykol400-Di(meth)acrylat (PEG400DMA) (Mittelwert n = 9), ferner Polyethylenglykol600-Di(meth)acrylat (PEG600DMA) (Mittelwert n = 13).

In einer ersten Ausführungsform betrifft die Erfindung daher radikalisch härtbare Kunstharz-Befestigungssysteme wie in Anspruch 1 oder einem der abhängigen Ansprüche definiert, nämlich radikalisch härtbare Kunstharz-Befestigungssysteme, welche ein oder mehrere Reaktivverdünner ausgewählt aus radikalisch härtbaren Oligoalkylenglykoldi(meth)acrylaten beinhalten, dadurch gekennzeichnet, dass

a) es sich bei den genannten radikalisch härtbaren Oligoalkylenglykoldi(meth)acrylaten um solche der Formel I,

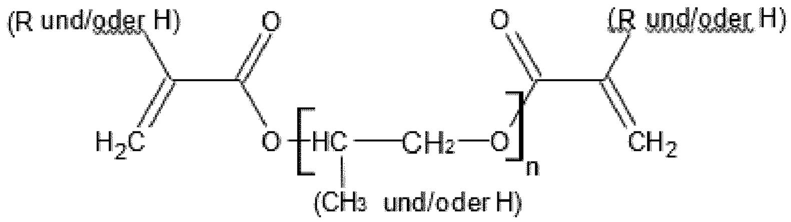

(I)

worin die Reste R unabhängig voneinander für $C_1$-$C_7$-Alkyl stehen, insbesondere für Methyl, und worin n für durchschnittlich 4,2 bis 7 steht, handelt, oder

b) dass es sich bei den genannten Reaktivverdünnern in Form von radikalisch härtbaren Oligoalkylenglykoldi(meth)acrylaten um solche handelt, die ausgewählt sind aus Oligoalkylenglykoldi(meth)acrylaten mit im Mittel mehr als zwei Alkylenglykoleinheiten je Molekül und aus alkoxylierten Tri-, Tetra- und Pentamethacrylaten, und (im Fall b)) die Kunstharz-Befestigungssysteme auf Reaktiv-Kunstharzen basieren, ausgewählt aus solchen der Formel

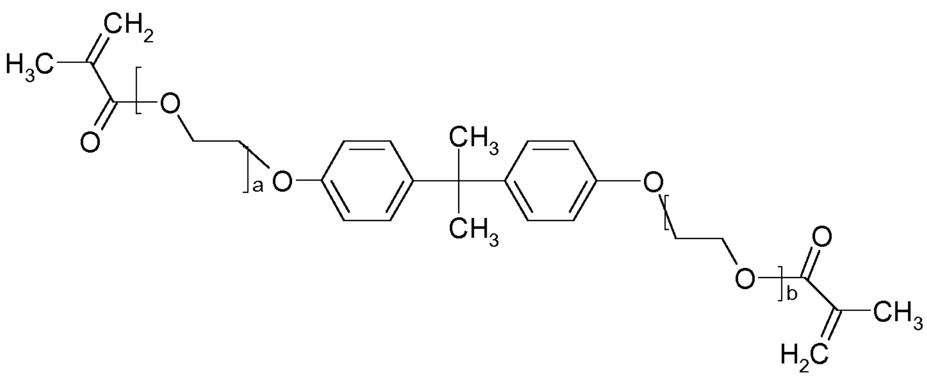

worin a und b jeweils unabhängig voneinander für eine Zahl größer oder gleich 0 stehen mit der Maßgabe, dass vorzugsweise mindestens einer der Werte größer als 0 ist;
und aus Urethan(meth)acrylaten, die aus der Umsetzung eines vorverlängerten monomeren Di- oder Polyisocyanats und/oder aus der Umsetzung eines polymeren Di- oder Polyisocyanats mit Hydroxyethyl- oder Hydroxypropyl(meth)acrylat resultieren, wobei
im Falle b) die ein oder mehreren Reaktivverdünner ausgewählt sind aus Oligoalkylenglykoldi(meth)acrylaten mit im Mittel mehr als zwei Alkylenglykoleinheiten je Molekül und alkoxylierten Tri-, Tetra- und Pentamethacrylaten wie z.B. alkoxyliertes (z.B. ethoxyliertes oder propoxyliertes) Trimethylolpropantri(meth)acrylat (SR492, SR415, SR 454, SR492, SR499, SR502 von Sartomer), alkoxyliertes (z.B. ethoxyliertes oder propoxyliertes) Glyzerintri(meth)acrylat (SR9020, SR9046 von Sartomer), alkoxyliertes (z.B. ethoxyliertes oder propoxyliertes) Pentaerythritoltetra(meth)acrylat (SR494, SR596, Sartomer), insbesondere Oligoalkylenglykoldi(meth)acrylate der oben gezeigten Formel I, vorzugsweise die vorstehend und in den Beispielen spezifisch genannten, sind.

In einer zweiten Ausführungsform betrifft die Erfindung die Verwendung eines wie vor- und nachstehend definierten Kunstharz-Befestigungssystems als Klebemittel in der Befestigungstechnik, insbesondere zur Befestigung von Verankerungsmitteln in Bohrlöchern oder Spalten, wie in Anspruch 11 definiert.

Eine dritte Erfindungsverkörperung betrifft ein Verfahren zur Herstellung der Kunstharz-Befestigungssysteme, dadurch gekennzeichnet, dass den übrigen Bestandteilen, insbesondere einer Kunstharz-Komponente bei einem Mehrkomponentensystem, Reaktivverdünner wie vor- und nachstehend definiert zugemischt werden und insbesondere, im Falle von Mehrkomponentensystemen in separaten Kompartimenten, in Verpackungen abgefüllt werden, wie in Anspruch 12 definiert.

Eine vierte Erfindungsverkörperung betrifft ein Verfahren zur Befestigung von beispielsweise Verankerungsmitteln in Bohrlöchern oder Spalten unter Verwendung der vor- und nachstehend definierten Kunstharz-Befestigungssysteme, die mindestens einen der erfindungsgemäß zu verwendenden radikalisch härtbaren Reaktivverdünner beinhalten, wie in Anspruch 13 definiert.

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was jeweils besondere Ausführungsformen der in den Ansprüchen definierten Erfindung darstellt.

Wo Gewichtsangaben in Prozent (Gew.-%) gemacht werden, beziehen sich diese, wenn nichts anderes gesagt ist, auf die Gesamtmasse der Reaktanden und Zusätze aller (im fertig formulierten Zustand flüssigen und pastösen) Komponenten des Befestigungs-Kunstmörtelsystems, also ohne Verpackung, d.h. die Masse der gesamten zugehörigen Reaktionsharzformulierungsbestandteile.

"Radikalisch härtbare (im Reaktiv-Kunstharzanteil olefinische Doppelbindungen aufweisende) Kunstharz-Befestigungssysteme" bedeutet insbesondere, dass die erfindungsgemäßen Kunstharz-Befestigungssysteme auf Reaktiv-Kunstharzen basieren, dabei jedoch neben den bisher und nachfolgend genannten Bestandteilen auch weitere übliche Inhaltsstoffe (Bestandteile; z.B. Füllstoffe, Additive oder andere oben oder unten genannte Bestandteile) beinhalten können. Diese weiteren Inhaltsstoffe können beispielsweise in einer Menge von insgesamt bis zu 80, vorzugsweise zwischen 0,01 und 65 Gew.-%, vorliegen. Auch "basierend auf" steht, bedeutet dies insbesondere, dass der betreffende Bestandteil mehr als 50, vorzugsweise mehr als 60, wie mehr als 70 Gew.% bis zu jeweils 100 Gew.-% (bezogen auf den jeweiligen Bestandteil, z.B. "Härter") der nach "auf Basis von" genannten Stoffe enthält.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Wo das Attribut "ferner" erwähnt wird, bedeutet dies, dass Merkmale ohne dieses Attribut stärker bevorzugt sein können.

(Meth)acryl steht für Acryl, Methacryl oder Acryl und Methacryl (als Gemisch).

Unter radikalisch härtenden ungesättigten Reaktiv-Kunstharzen sind in im Falle von Variante a) in Anspruch 1 und der ersten Ausführungsform der Erfindung oben in erster Linie solche zu verstehen, die als radikalisch aushärtende (was "(z.B. vor Härterzugabe) aushärtbar einschließt) Komponenten organische Verbindungen mit ungesättigten (z.B. olefinischen) Resten beinhalten oder insbesondere daraus bestehen, insbesondere solche, die härtbare Ester mit ungesättigten Carbonsäureresten umfassen; z.B. insbesondere (Meth)Acrylat-oder (Meth)-Acrylamid-Monomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)acrylate (einschließlich Hydroxypropyl(meth)acrylat, Hydroxyethyl(meth)acrylat, Ethylenglykoldi(meth)acrylat, Butandioldi(meth)acrylat, Hexandioldimethacrylat oder (vorzugsweise jeweils propoxyliertem oder insbesondere ethoxyliertem) aromatischem Diol-, wie Bisphenol-A-, Bisphenol-F- oder Novolak-(insbesondere di-) (meth)-acrylat), Epoxy(meth)acrylate (insbesondere in Form von Umsetzungsprodukten von Di- oder Polyepoxiden, z.B. Bisphenol-A-, Bisphenol-F- oder Novolak-di- und/ oder -poly-glycidylethern, mit ungesättigten Carbonsäuren, z.B. $C_2$-$C_7$-Alkencarbonsäuren, wie insbesondere (Meth)acrylsäure), Urethan- und/oder Harnstoff(meth)acrylate (was, wie dem Fachmann bekannt, auch vorverlängerte und/oder oligomere Urethan- und/oder Harnstoff(meth)acrylate umfasst), und/oder ungesättigte Polyesterharze, oder dergleichen; oder ein Gemisch von zwei oder mehr dieser härtbaren ungesättigten organischen Komponenten.

Beispiele für in besonderen Ausführungsformen der Erfindung gemäß Variante a) in Anspruch 1 und der ersten Ausführungsform der Erfindung oben vorhandene bzw. verwendete Epoxy(meth)acrylate sind solche der Formel

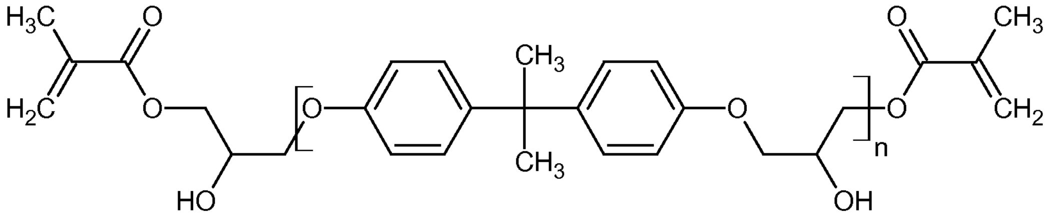

worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich).

Beispiele für in besonderen Ausführungsformen der Erfindung nützliche propoxylierte oder insbesondere ethoxylierte aromatische Diol-, wie Bisphenol-A-, Bisphenol-F- oder Novolak-(insbesondere di-)(meth)acrylate sind solche der Formel

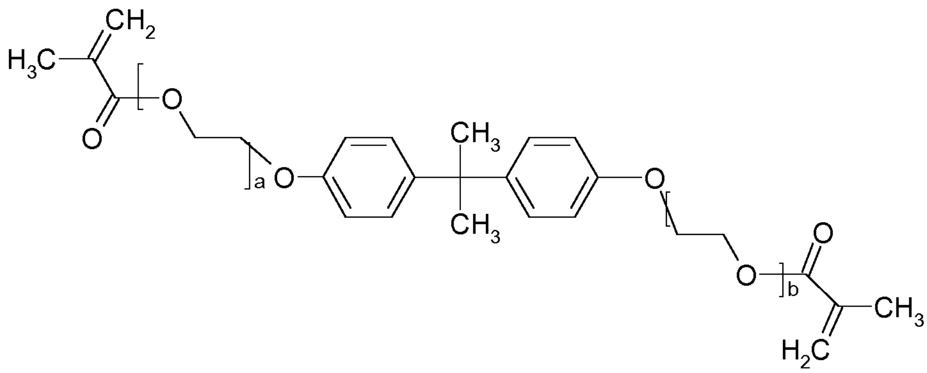

(welche in Variante b) gemäß Anspruch 1 1 und der ersten Ausführungsform der Erfindung oben eine der beiden dort möglichen Klassen von Reaktiv-Kunstharzen neben den dort genannten Urethanmethacrylaten bedeuten) worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich).

Beispiele für in besonderen Ausführungsformen (insbesondere in Variante b) gemäß Anspruch 1 und der ersten Ausführungsform der Erfindung oben) der Erfindung vorhandene bzw. verwendete Urethan(meth)acrylate sind solche, die einerseits aus der Umsetzung eines vorverlängerten monomeren Di- oder Polyisocyanats und/oder andererseits aus der Umsetzung eines polymeren Di- oder Polyisocyanats (z.B.: PMDI, MDI und/oder MDI) mit Hydroxyethyl- oder Hydroxypropyl(meth)acrylat resultieren. Die Art und Weise zur Durchführung von Vorverlängerungsreaktionen und die Vielzahl der Vorverlängerungsreaktionsmöglichkeiten sind dem Fachmann bekannt und werden hier nicht explizit beschrieben. Es sei hier beispielhaft auf die Anmeldungen EP 0508183 A1, EP 0432087 A1 und die noch nicht offengelegte Anmeldung vom 14.02.2014 mit der Anmeldungsnummer DE 10 2014 101 861.3

Bei den in der DE 10 2014 101 861.3 beschriebenen, als radikalisch härtenden ungesättigten Reaktiv-Kunstharze in den Ausführungsformen der Erfindung bevorzugten Urethanmeathacrylaten, handelt es sich insbesondere die nach folgendem Verfahren erhältlichen:

Es handelt sich um ein Verfahren zur Herstellung von Vinylesterurethanharzen, insbesondere Urethan(meth)acrylat-Harzen (nachfolgend auch U(M)A-Harze), welches dadurch gekennzeichnet ist, dass als Edukt für die Herstellung des Vinylesterurethan-, insbesondere U(M)A-Harzes ein Isocyanat oder ein Isocyanatgemisch jeweils mit einer mittleren Funktionalität von mehr als 2 (die auch durch Mischung von Isocyanaten einer Funktionalität unter zwei mit Isocyanaten einer Funktionalität größer 2 erzielt werden kann), beispielsweise von 2,1 bis 5, zum Beispiel von 2,2 bis 4, vorteilhaft z.B. von 2,3 bis 3,5, mit einem mindestens eine eine C-C-Doppelbindung (nicht konjugierte - olefinische Bindung) aufweisenden aliphatischen Alkohol, insbesondere einem Hydroxyalkyl(meth)acrylat, vorzugsweise Hydroxyniederalkyl(meth)acrylat, wie Hydroxyethyl(meth)acrylat oder insbesondere Hydroxypropyl(meth)acrylat, vorzugsweise 2-Hydroxypropylmethacrylat (HPMA), umgesetzt wird. Das technisch verfügbare HPMA ist dabei als eine Mischung aus 2-Hydroxypropylmethacrylat und Hydroxyisopropylmethacrylat zu sehen, - auch andere eine olefinische Bindung aufweisende aliphatische Alkohole können als technische Isomerengemische oder als reine Isomere vorliegen.

Unter einem Isocyanat mit einer mittleren Funktionalität von mehr als 2, beispielsweise von 2,1 bis 5, zum Beispiel von 2,2 bis 4, vorteilhaft z.B. von 2,3 bis 3,5, ist beispielsweise ein Polyisocyanat mit Uretdion-, Isocyanurat-, Iminooxadiazinon-, Uretonimin-, Biuret-, Allophanat- und/oder Carbodiimid-Strukturen (vorteilhaft mit einer Molekulargewichtsverteilung derart, dass keine einzelne Molekülspezies zu mehr als 50 Gewichtsprozent vorliegt und gleichzeitig mehr als 50 Gewichtsprozent der Ketten aus mindestens 3 + 1 kovalent gebundenen Monomereinheiten/Reaktanten zusammengesetzt sind (siehe genauer Polymerdefinition nach REACH)) oder vorzugsweise eine (z.B. in technischen Herstellprozessen typischerweise anfallende oder nachfolgend gezielt (z.B. durch Zugabe und/oder Abdestillation von Monomeren oder Monomerenmischungen) eingestellte) Mischung von (i) ein oder mehreren monomeren Mono- oder insbesondere Diisocyanaten, wie Diphenylmethandiisocyanat (MDI), insbesondere 4,4'-Diphenylmethyldiisocyanat oder 2,2'-Diphenylmethandiisocyanat oder Mischungen von Diphenylmethandiisocyanat-Isomeren (mit unterschiedlichen Positionen der Isocyanatgruppen an den Phenylkernen) wie den gerade genannten, mit (ii) ein oder mehreren "polymeren" Diphenylmethandiisocyanaten (PMDI), das heißt vorzugsweise Roh-MDI (Rohprodukt der industriellen Herstellung von MDI ohne Trennung der einzelnen Isomeren z.B. durch Destillation) mit (d.h. beinhaltend) mehreren Isomeren und höherfunktionellen Homologen und z.B. einem mittleren Molekulargewicht in der Größenordnung von 200 bis 800 g/mol und einer Funktionalität wie oben angegeben, z.B. mit einem mittleren Molekulargewicht von 280 bis 500, z.B. 310 bis 480 und einer Funktionalität von 2,4 bis 3,4, z.B. von 3,2. Bevorzugt sind marktübliche PMDI, die aus dem Roh-MDI selbst oder auch aus dem Roh-MDI z.B. durch Abdestillation und/oder Zugabe von monomerem MDI erhalten werden und ein mittleres Molekulargewicht von 310-450 aufweisen und auch Uretdion-, Isocyanurat-, Iminooxadiazinon-, Uretonimin-, Biuret-, Allophanat- und/oder Carbodiimid-Strukturen beinhalten können. Besonders bevorzugt sind marktübliche PMDI mit einer Molekulargewichtsverteilung derart, dass keine einzelne Molekülspezies zu mehr als 50 Gew.-% vorliegt.

Unter "Funktionalität" ist die mittlere Anzahl der Isocyanatgruppen pro Molekül zu verstehen, bei Diphenylmethandiisocyanat ist diese Funkionalität (im Wesentlichen, d.h. von verunreinigungsbedingten Abweichungen abgesehen) 2, bei den PMDI handelt es sich um eine (in der Regel vom Hersteller angegebene) mittlere Funktionalität, die gemäß der Formel

$$f = \frac{\sum n_i \cdot f_i}{\sum n_i}$$

($f$ = Funktionalität, $n_i$ = Zahl der Moleküle einer Funktionalität $f_i$,) errechnet werden kann und vorzugsweise zwischen 2,1 und 5,0 oder in den Bereichen wie oben angegeben liegt.

Das Verfahren zur Herstellung von Vinylesterurethanharzen, insbesondere Urethan(meth)-acrylat-Harzen, findet vorzugsweise in Gegenwart von einem Katalysator, wobei entsprechende Katalysatoren, die die Reaktion zwischen Hydroxylgruppen und Isocyanatgruppen katalysieren, dem Fachmann hinreichend bekannt sind, beispielsweise einem tertiären Amin, wie 1,2-Dimethylimidazol, Diazabicyclooctan, Diazabicyclononan, , oder einer Organometallverbindung (z.B. von K, Sn, Pb, Bi, Al und insbesondere auch von Übergangsmetallen wie Ti, Zr, Fe, Zn, Cu); sowie Mischungen von zwei oder mehr davon; beispielsweise (bezogen auf die Reaktionsmischung) in einem Anteil von 0,001 bis 2,5 Gew.-%; vorzugsweise in Gegenwart von *Stabilisatoren* (Inhibitoren), wie beispielsweise Phenothiazin, TEMPO, TEMPOL, Hydrochinon, Dimethylhydrochinon, Triphenylphosphit, tert.-Butylhydrochinon, Hydrochinonmonoethylether, tert.-Butylbrenzkatechin und/oder p-Benzochinon, sowie Mischungen von zwei oder mehr davon; z.B. in einer Menge von 0,0001 bis 2,5 Gew.-%, bezogen auf die Reaktionsmischung, statt, bei bevorzugten Temperaturen z.B. im Bereich von 0 bis 120 °C, vorteilhaft von 50 bis 95 °C.

Beispiele für geeignete Katalysatoren und Stabilisatoren sind dem Fachmann bekannt, beispielsweise wie aus "Polyurethane Kunststoff-Handbuch 7" von Becker, G.W.; Braun, D.; Oertel, G., 3. Auflage, Carl Hanser Verlag, 1993, ersichtlich.

Die Reaktion kann ohne Lösungsmittel (der mindestens eine C-C-Doppelbindung aufweisende aliphatische Alkohol, insbesondere das Hydroxy(nieder)alkyl(meth)acrylat selbst dient dann als Lösungsmittel) oder in Gegenwart eines geeigneten Lösungsmittels durchgeführt werden, beispielsweise eines weiteren Reaktivverdünners. "Reaktiv" bezieht sich dabei hier auf die Formulierung des Klebemittels und dessen Aushärtung, nicht auf die Addition des Alkohols an das Isocyanat.

Die Reaktion kann auch derart geführt werden, dass über eine Vorverlängerung ein Präpolymer gebildet und erst danach die noch übrigen Isocyanatgruppen mit dem mindestens eine C-C-Doppelbindung aufweisende aliphatische Alkohol, insbesondere dem Hydroxy(nieder)-alkyl(meth)acrylat, wie oben oder unten beschrieben umsetzt.

Für die Herstellung des Präpolymeren finden dabei zum Erzielen einer mittleren Isocyanat-Funktionalität größer als zwei die oben genannten Isocyanate und Polyole mit zwei oder mehr Hydroxygruppen pro Molekül und/oder Polyamine mit zwei oder mehr Aminogruppen pro Molekül oder Aminole mit zwei oder mehr Amino- und Hydroxygruppen pro Molekül Verwendung, oder es werden Isocyanate mit einer Funktionalität von 2 mit Polyolen, Polyaminen oder Aminolen mit einer mittleren OH- und/oder Amino-Funktionalität von mehr als 2 eingesetzt.

Polyole (Di- oder höherfunktionale Alkohole) sind dabei insbesondere zwei- oder höherfunktionale Alkohole, z.B. Folgeprodukte des Ethylen- oder Propylenoxids, wie Ethandiol, Di- bzw. Triethylenglykol, Propan-1,2- oder -1-3-diol, Dipropylenglykol, andere Diole, wie 1,2-, 1,3-oder 1,4-Butandiol, 1,6-Hexandiol, Neopentylglykol, 2-Ethylpropan-1,3-diol oder 2,2-Bis(4-hydroxycyclohexyl)-propan, Triethanolamin, Bisphenol A oder Bisphenol F oder deren Oxyethylierungs-, Hydrierungs- und/oder Halogenierungsprodukte, höherwertige Alkohole, wie z.B. Glycerin, Trimethylolpropan, Hexantriol und Pentaerythrit, hydroxylgruppenhaltige Polyether, z.B. Oligomere aliphatischer oder aromatischer Oxirane und/ oder höherer cyclischer Ether, z.B. Ethylenoxid, Propylenoxid, Styroloxid und Furan, Polyether mit jeweils endständigem Hydroxy, die in der Hauptkette aromatische Struktureinheiten enthalten, z.B. die des Bisphenol A bzw. F, hydroxylgruppenhaltige Polyester auf der Basis der oben genannten Alkohole bzw. Polyether und Dicarbonsäuren bzw. ihrer Anhydride, z.B. Adipinsäure, Phthalsäure, Isophthalsäure, Terephthalsäure, Tetra- bzw. Hexahydrophthalsäure, Endomethylentetrahydrophthalsäure, Tetrachlorphthalsäure oder Hexachlor-endomethylentetrahydrophthalsäure, Maleinsäure, Fumarsäure, Itaconsäure, Sebacinsäure oder dergleichen. Besonders bevorzugt sind Hydroxylverbindungen mit Kettenversteifung bewirkenden aromatischen Struktureinheiten, Hydroxyverbindungen mit ungesättigten Komponenten zur Erhöhung der Vernetzungsdichte, wie Fumarsäure, oder verzweigte oder sternförmige Hydroxyverbindungen, insbesondere drei-bzw. höherfunktionale Alkohole und/ oder Polyether bzw. Polyester, die deren Struktureinheiten enthalten. Besonders bevorzugt sind Niederalkandiole (ergeben divalente Reste -O-Niederalkylen-O-).

Aminole (Aminoalkohole) sind Verbindungen, die insbesondere eine oder mehrere Hydroxy- und eine oder mehrere Aminogruppen in ein und demselben Molekül enthalten. Bevorzugte Beispiele sind aliphatische Aminole, insbesondere Hydroxyniederalkylamine (ergeben Reste -NH-Niederalkylen-O- oder-O-Niederalkylen-NH-), wie Ethanolamin, Diethanolamin oder 3-Aminopropanol, oder aromatische Aminole, wie 2-, 3- oder 4-Aminophenol.

Polyamine (Di- oder höherfunktionale Amine) sind organische Aminoverbindungen mit 2 oder mehr Aminogruppen, insbesondere Hydrazin, N,N'-Dimethylhydrazin, aliphatische Di- oder Polyamine, insbesondere Niederalkandiamine (ergeben Reste -NH-Niederalkyl-NH-), wie Ethylendiamin, 1,3-Diaminopropan, Tetra- oder Hexamethylendiamin oder Diethylentriamin, oder aromatische Di- oder Polyamine, wie Phenylendiamin, 2,4- und 2,6-Toluoldiamin, Benzidin, o-Chlorbenzidin, 2,5-p-Dichlorphenylendiamin, 3,3'-Dichlor-4,4'-diamino-diphenylmethan oder 4,4'-Diaminodiphenylmethan, Polyetherdiamine (Polyethylenoxide mit endständigen Aminogruppen) oder Polyphenyl/Polymethylen-polyamine, die durch Kondensation von Anilinen mit Formaldehyd erhältlich sind.

Das Verhältnis von freien Isocyanatgruppen des oder der Isocyanate zu Hydroxygruppen des oder der Hydroxyniederalkyl(meth)acrylate wird vorteilhaft derart gewählt, dass eine schnelle und vollständige Umsetzung der Isocyanatgruppen resultiert, das heißt, die Mol-menge der Hydroxygruppen (und damit die korrelierende Mol-Menge an Hydroxyniedera-lkyl(meth)acrylat) ist größer als die Mol-Menge der Isocyanatgruppen, z.B. 1,03 bis 5-mal so groß, wie z.B. 1,05 bis 4 mal so groß oder 1,1 bis 3 mal so groß. Überschüssiges Hydroxyniederalkyl(meth)acrylat dient als Reaktivverdünner.

Die mittels dieses Verfahrens erhältlichen U(M)A-Harze sind als bevorzugte ungesättigte Reaktiv-Kunstharze in den Erfindungsverkörperungen beinhaltet.

In besonders bevorzugten Ausführungsformen der Erfindungsgegenstände werden die erfindungsgemäß zu verwendenden Oligoalkylenmethacrylate bereits bei der Herstellung oder zur reaktiven Verdünnung von Urethanmethacrylatharzen mit einer Funktionalität $f > 2,1$, insbesondere mit einer Funktionalität $f > 2,7$ eingesetzt. In einer ganz besonders bevorzugten Ausführungsform weist das Reaktionsharz (UM-Harz und alle radikalisch härtbaren Zusätze) einen aus der Herstellung resultierenden Restgehalt an Hydroxypropyl-(meth)acrylat oder Hydroxyethyl(meth)acrylat von < 4 %, z.B. < 3 % und insbesondere < 1 oder sogar < 0,1 % auf.

Insbesondere im Fall der Verwendung von Polyethylenglykol-Dimethylacrylat (PEG-DMA), wie PEG200DMA, sind die ungesättigten Polyurethanderivate wie vorstehend beschrieben besonders bevorzugt als einzige Vertreter der Gruppe der Urethanmethacrylate, wie auch die übrigen vor- und nachstehend genannten radikalisch härtenden ungesättigten Reaktiv-Kunstharze außer den übrigen genannten Urethanmethacrylaten.

Das radikalisch härtbare ungesättigte Reaktiv-Kunstharz (bzw. die Gesamtmenge seiner Komponenten) liegt beispielsweise in einem Gewichtsanteil von 1 bis 99,5 %, wie etwa von 10 bis 90, z.B. 15 bis 80 %, vor.

Wichtige Beispiele für mögliche weitere Inhaltsstoffe (Bestandteile) sind (beispielsweise aminische) Beschleuniger, Inhibitoren, reaktive Verdünner, Thixotropiermittel, Füllstoffe und weitere Additive.

Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem Toluidin, Anilin oder Xylidin, beispielsweise N,N-bis(hydroxymethyl- oder hydroxyethyl)-toluidinen oder-xylidinen, wie N,N-bis(hydroxypropyl- oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxybenzyl)-benzol, (nichtalkylierte oder alkylierte) Brenzcatechine wie tert.-Butylbrenzcatechin, 3,5-Di-tert-butyl-1,2-benzoldiol oder 4-tert.-Butyl-1,2-benzoldiol, oder insbesondere 4-Methoxyphenol, oder Gemische von zwei oder mehr davon, in Frage. Diese habenvorzugsweise einen Anteil von bis zu 1 Gew.-%, insbesondere zwischen 0,0001 und 0,5 Gew.-%, z.B. zwischen 0,01 und 0,1 Gew.-%.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beeinflussen) kommen vorzugsweise Phenothiazin oder organische Nitroxylradikale in Betracht. Als organische Nitroxylradikale können beispielsweise solche zugesetzt sein, wie sie in der DE 199 56 509 beschrieben sind, insbesondere 1-oxyl-2,2,6,6-tetramethylpiperidin-4-ol ("4-OH-TEMPO"). Der Gewichtsanteil der nicht-phenolischen Inhibitoren liegt vorzugsweise im Bereich von 0,1 ppm bis 2 Gew.-%, vorzugsweise im Bereich von 1 ppm bis 1 Gew.-%.

Als Thixotropiermittel können übliche thixotropieverursachende Rheologiehilfsmittel verwendet werden, wie pyrogene Kieselsäure. Sie können z.B. in einem Gewichtsanteil von 0,01 bis 50 Gew.-%, beispielsweise von 1 bis 20 Gew.-%, zugesetzt werden.

Als Füllstoffe finden übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung, oder andere, wie beispielsweise in WO 02/079341 und WO 02/079293 genannt (die hier diesbezüglich durch Bezugnahme aufgenommen werden), oder Gemische davon, wobei die Füllstoffe ferner oder insbesondere auch silanisiert sein können, beispielsweise als methacrylsilanbehandeltes Quarzmehl, wie Silbond MST® der Fa. Quarzwerke GmbH, als methacrylsilanbehandelte Kieselerde, wie Aktisil MAM® von Hoffmann Mineral, oder methacryloxypropyltrimethoxysilan-behandelte pyrogene Kieselsäure, wie Aerosil R 711® von Evonik. Die Füllstoffe können in einer oder in mehreren Komponenten eines erfindungsgemäßen Mehrkomponentenkits, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 90 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann, vorzugsweise wird). Zusätzlich oder alternativ können hydraulisch härtbare Füllstoffe, wie Gips (z.B. Anhydrit), Branntkalk oder Zement (z.B. Tonerd- oder Portlandzement), Wassergläser oder aktive Aluminiumhydroxide, oder zwei oder mehr davon, zugesetzt werden.

Auch weitere Additive können zugesetzt sein, wie Weichmacher, nicht reaktive Verdünnungsmittel, Flexibilisatoren, Stabilisatoren, Rheologiehilfsmittel, Netzmittel und Farbstoffe. Derartige weitere Zusätze können vorzugsweise insgesamt in Gewichtsanteilen von insgesamt 0 bis 90 %, beispielsweise von 0 bis 40 Gew.-%, zugesetzt sein.

Die erfindungsgemäß zu verwendenden Reaktivverdünner sind vorzugsweise in einem Anteil vom 0,1 bis 90 Gew.-%, insbesondere von 0,5 bis 75 Gew.-%, insbesondere von 1 bis 40 Gew.-% in den erfindungsgemäßen Kunstharz-Befestigungssystemen beinhaltet.

Ferner können weitere reaktive Verdünner zugesetzt sein, insbesondere solche, die ebenfalls eine günstige Kennzeichnung aufweisen. Als "weitere reaktive Verdünner" zu bevorzugten radikalisch härtenden ungesättigten Reaktionskunstharzen/Vinylestern können zusätzlich auch andere härtbare ungesättigte, wie olefinische, Verbindungen, beispielsweise ausgewählt aus Mono-, Di-, Tri- oder Poly(meth)acrylaten, wie Hydroxyalkyl(meth)acrylate, wie Hydroxypropylmethacrylat (weniger bevorzugt), sonstige (Meth)acrylsäureester, wie (ohne dass diese Aufzählung abschließend sein soll) Acetacetoxyalkyl(meth)acrylat, (Meth)acrylsäuremethylester, 1,4-Butandioldi(meth)acrylat, Trimethylolpropantri(meth)acrylat oder; ferner Styrole , wie Styrol, $\alpha$-Methylstyrol, Vinyltoluol, tert.-Butylstyrol und/oder Divinylbenzol, oder Gemische von zwei oder mehr davon, als mit dem radikalisch härtenden ungesättigten Reaktionsharz parallel aushärtende Bestandteile vorgesehen sein, beispielsweise in einem Gewichtsanteil von 0,1 bis 90 Gew.-%, z.B. zwischen 0,5 und 75 Gew.-% oder zwischen 1 und 40 Gew.-%. Vorzugsweise wird von der Zugabe weiterer Reaktivverdünner abgesehen. Insbesondere im Falle der Verwendung von nur Triethylenglykoldimethacrylat als erfindungsgemäß zu verwendendem Reaktivverdünner ist vorzugsweise von der Verwendung von Acetoacetato-Verbindungen wie Acetylaceton, Acetoacetatoethylmethacrylat und Triacetoacetatotrimethylolpropan als zusätzlichem Verdünner abzusehen.

Der Härter beinhaltet mindestens ein Peroxid als eigentlichen Initiator. Der Begriff "Härter" bedeutet dabei vorzugsweise vor- und nachstehend reine Initiatoren oder phlegmatisierte Initiatoren mit oder ohne Füllstoffzusatz und/oder weitere Zusätze, wie Wasser, Verdickungsmittel und/oder weitere Zusatzstoffe, wie Farbstoffe, Additive und dergleichen, mit anderen Worten, eine komplette Härterkomponente. Zur Phlegmatisierung können übliche Zusätze, wie Gips, Kreide, pyrogene Kieselsäure, Phthalate, Chlorparaffin oder dergleichen, zugesetzt sein. Daneben können auch noch Füllstoffe und/ oder (insbesondere zur Herstellung einer Paste oder Emulsion) Lösungsmittel, insbesondere Wasser, Verdickungsmittel, Füllstoffe (wie z.B. oben genannt) und weitere der oben genannten Zusätze zugesetzt sein, wobei Wasser als Reaktionspartner für die Hydrolyse der hydrolysierbare Gruppen beinhaltenden Silane dienen kann.

Der Anteil aller Zusätze kann beispielsweise bei einem Gewichtsanteil von insgesamt 0,1 bis 70 Gew.-%, z.B. von 1 bis 40 Gew.-%, liegen.

Bezogen auf die Härterkomponente liegt der Anteil des Initiators in einer möglichen bevorzugten Ausführungsform der Erfindung bei 0,5 bis 90 Gew.-%, insbesondere bei 0,9 bis 30 Gew.-%.

Als Initiator für die Härtung der erfindungsgemäßen Kunstharz-Befestigungssysteme finden im Falle der radikalischen Polymerisation beispielsweise radikalbildende Peroxide, z.B. organische Peroxide, wie Diacylperoxide, z.B. Dibenzoylperoxid, Ketonperoxide, wie Methylethylketonperoxid oder Cyclohexanonperoxid, oder Alkylperester, wie tert-Butylperbenzoat, anorganische Peroxide, wie Persulfate oder Perborate, sowie Mischungen davon Verwendung.

Der Anteil des Härters an einem erfindungsgemäßen Kunstharz-Befestigungssystem insgesamt liegt dabei vorzugsweise in einem Bereich von 1 bis 60 Gew.-%, z.B. 2 bis 50 Gew.-%, wobei der Anteil an Peroxid, ebenfalls bezogen auf die Masse des gesamten zugehörigen Befestigungskunstmörtelsystems (100 %), insbesondere bei 0,1 oder mehr Gew.-%, vorzugsweise bei 1,5 bis 10 Gew.-%, liegt. In einer besonderen Ausführungsform liegt der Peroxidgehalt < 1 Gew.-% bezogen auf den Härter, in einer weiteren Möglichkeit liegt der Peroxidgehalt < 1 Gew.-% bezogen auf alle Komponenten.

Alternativ kann für die Härtung der erfindungsgemäßen Reaktiv-Kunstharzformulierungen ein Härtersystem vewendet werden, welches die Bestandteile:

a) mindestens einen Aktivator in Form eines Metallsalzes
b) als Radikalkettenstarter mindestens eine Thiol- und/oder Thiolester-Gruppen beinhaltende Verbindung,

beinhaltet. Durch die Kombination bzw. das Mischen der beiden Bestandteile können Radikale gebildet werden, welche anstelle von bisher üblichen Radikalbildnern eine Polymerisation von nichtaromatischen Doppelbindungen, z.B. olefinischen Doppelbindungen, beispielsweise Acrylaten oder Methacrylaten, auslösen können. Es sei hier auf die Patentanmeldung DE 10 2013 114 061.0 vom 16.12.2013 SH-acide Verbindungen) verwiesen.

Beispiele für Thiole sind Thioglycerin, Methyl-, Ethylmercaptan und höhere Homologe z.B. Dodecylmercaptan; Dimercaptane, wie Dimercaptopropansulfonsäure, Dimercaptobernsteinsäure, Dithiothreitol; Poly(ethylenglykol)dithiole, der allgemeinen Formel $HS-[CH_2-CH_2-O]_n-CH_2-CH_2-SH$, worin n für eine Zahl zwischen 0 bis 10 steht; flüssige Polysulfidpolymere mit Thiol-Endgruppen z.B. Thioplast G Typen der Firma Akzo Nobel; Polymercaptanhärter und -vernetzer z.B. SIQ-Amin 999 der Firma S.I.Q.-Kunstharze GmbH; ethoxylierte und/oder propoxylierte Alkohole aus Mono-, Di-, Tri-, Tetra-, Pentaolen und/oder anderen Polyolen mit Thiolendgruppen z.B. Capcure 3-800 der Firma Cognis, oder die nachfolgend als insbesondere geeigneten Thiole genannten Verbindungen. Als besonders geeigneter Thiolester sei hier der Octanthiolsäure-S-[3(triethoxysilyl)propyl]ester erwähnt. Beispiele für insbesondere geeignete Thiole sind Glykoldi(3-mercaptopropionat), Trimethylolpropantri(3-mercaptopropionat), Pentaerythritoltetra(3-mercaptopropionat), Dipentaerythritolhexa-3-mercaptopropionat, ethoxyliertes Trimethylolpropan-tris(3-mercaptopropionat) mit unterschiedlichen Ethoxylierungsgraden (z.B. ETTMP 700 und ETTMP 1300 der Firma Bruno Bock), Tris[2-(3-mercaptopropionyloxy)ethyl]isocyanurat, 3-Mercaptopropyltrimethoxysilan.

Ebenfalls alternativ kann für die Härtung der erfindungsgemäßen reaktiv-Kunstharzformulierungen ein Härtersystem verwendet werden, welches die folgenden Bestandteile beinhaltet:

a) mindestens einen Aktivator in Form eines Metallsalzes und
b) als Radikalkettenstarter mindestens eine CH-acide Verbindung der Formel A,

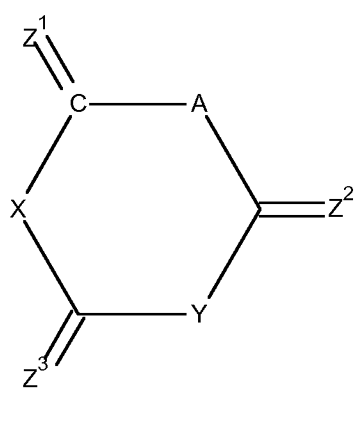

(A)

worin

(i)
-A- für -C($R^1$)($R^2$)- steht
-X- für eine Bindung, für -$NR^3$- oder für -($CR^4R^5$)$_p$- steht, oder für -O- steht,
Y für $NR^6$ oder für ($CR^7R^8$)$_q$ steht, oder für O steht,
wobei wenn X für O steht auch Y für O steht;
wobei vorzugsweise X für ($CR^4R^5$)$_p$ steht und Y für $CR^7R^8$ steht,
oder X für $NR^3$ und Y für $NR^6$ steht;
$Z^1$ für O, S, S=O oder S(=O)$_2$ steht,
$Z^2$ für O, S, S=O oder S(=O)$_2$ steht,
$Z^3$ für O, S, S=O oder S(=O)$_2$ oder für R9 und R10 steht,
p für 1, 2 oder 3 steht, vorzugsweise für 1 oder 2
q für 1, 2 oder 3 steht, vorzugsweise für 1;
und die Reste $R^1$, $R^2$, $R^3$, $R^4$, $R^5$, $R^6$, $R^7$ $R^8$, $R^9$ und $R^{10}$ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome (anstelle von C-Atomen; vorzugsweise ausgewählt aus O, N, wie NH oder N-Alkyl, und S) aufweisen, mit der Maßgabe, dass mindestens einer der Reste $R^1$ und $R^2$ Wasserstoff bedeutet, oder
(ii) offenkettige Verbindungen,
worin das die Brücke bildende Glied -C(=$Z^3$)- fehlt,
-A- für -C($R^1$)($R^2$)- steht, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende $C_1$-$C_4$-Alkylgruppe oder $C_1$-$C_4$-Alkoxygruppe oder vorzugsweise für eine jeweils unsubstituierte oder substituierte, gegebenenfalls Heteroatome (anstelle von C-Atomen; insbesondere ausgewählt aus O, N, wie NH oder N-Alkyl, und S) aufweisende $C_1$-$C_4$-Alkoxycarbonylmethylgruppe oder $C_1$-$C_4$-Alkylcarbonylmethylgruppe stehen,
$R^1$ und $R^2$ beide Wasserstoff bedeuten und
$Z^1$ und $Z^2$ die genannten Bedeutungen haben;
oder X für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende $C_1$-$C_4$-Alkylgruppe oder $C_1$-$C_4$-Alkoxygruppe oder $C_1$-$C_4$-Alkoxycarbonylmethylgruppe oder $C_1$-$C_4$-Alkylcarbonylmethylgruppe steht,
Y und $Z^2$ gemeinsam mit dem bindenden Kohlenstoffatom -CN bedeuten,
$Z^1$ die oben genannten Bedeutungen hat, und
$R^1$ und $R^2$ jeweils wie oben definiert sind mit der Maßgabe, dass mindestens einer der Reste Wasserstoff bedeutet;
und/oder Salze davon. Bevorzugte Beispiele für solche Verbindungen sind 2,4,6-Pyrimidintrionderivate sind Barbitursäure (2,4,6-Pyrimidintrion) selbst, 1-Benzyl-5-phenylbarbitursäure (1-(Phenylmethyl)-5-Phenyl-2,4,6-Pyrimidintrion), 5-Butylbarbitursäure (5-Butyl-2,4,6-Pyrimidintrion), 1-Cyclohexyl-5-ethylbarbitursäure (1-Cyclohexyl-5-Ethyl-2,4,6-Pyrimidintron) oder 2-Thiobarbitursäure (4,6-Dihydroxy-2-Mercaptopyrimidin), 1 ,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3-dioxan-4,6-dion oder 2,2,5-Trimethyl-1,3-dioxan-4,6-dion, 3-Oxoglutarsäuredimethylester, und/oder Diethyl-1,3-acetondicarboxylat, Ethylcyanoacetat, Methylcyanoacetat oder 2-Ethylhexylcyanoacetat, oder in der DE 10 2011 078 785 genannte 1,3-Dioxoverbindungen. Es sei hier auf die deutsche Patentanmeldung DE 10 2014 105 202.1 vom 11.04.2014 verwiesen.

Bei den als Aktivatoren in Form eines Metallsalzes, was auch Metallkomplexe und Metalloxide einschließt, verwendeten Komponenten handelt es sich in beiden Fällen vorzugsweise um ein oder mehrere Metallsalze oder insbesondere um Salze von organischen und/oder anorganischen Säuren mit Metallen, z.B. ausgewählt aus Kobalt, Zirkonium, Zink, Cer, Zinn, Wismut oder vorzugsweise Vanadium, Mangan, Kupfer oder Eisen, oder Gemischen von zwei oder mehr davon, wobei die organischen Säuren vorzugsweise gesättigt sind, wobei Vanadium und Eisen oder insbesondere Mangan und Kupfer, gegebenenfalls in Gegenwart eines oder zweier Sekundäraktivatoren mit Metallanteil aus der Gruppe der oben genannten Metalle, bevorzugt ist, insbesondere in Form von Salzen oder Komplexen mit anorganischen Säuren und/oder Carboxylatresten, wie Carboxylaten mit $CH_3$, $C_2$-$C_{20}$-Alkyl, einem $C_6$-$C_{24}$Arylrest oder $C_7$-$C_{30}$-Aralkylrest, beispielsweise Oktoat, z.B. 2-Ethylhexanoat (Isooctanoat), ferner Neodecanoat, oder Acetylacetonat. Besonders bevorzugt sind Mangancarbonat oder -carboxylate, wie Mn-acetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat und Kupferchlorid umfasst.

Erfindungsverkörperungen mit den beiden genannten Thiol- oder CH-Acide-Verbindungenbasierten Härtern bilden bevorzugte Ausführungsformen.

Unter einem Loch oder Spalt ist ein solches Loch oder ein solcher Spalt zu verstehen, das oder der in einem festen (insbesondere bereits als solcher fertiggestellten) Untergrund (Substrat), insbesondere Mauerwerk oder Beton, ggf. auch in einem rissigen Substrat, wie rissigem Beton, vorhanden und von mindestens von einer Seite her zugänglich ist, beispielswiese ein Bohrloch, oder ferner ein beim Mörteln mit anorganischen Mörtel- oder Putzmassen (wie mit Zement oder Gips) ausgesparter Bereich oder dergleichen.

In einer besonderen und vorteilhaften Ausführungsform der Erfindung sind die härtbaren Komponenten und die zugehörigen Härter (Härterkomponenten) eines erfindungsgemäßen Kunstharz-Befestigungssystems voneinander getrennt in einem Zwei- oder Mehrkomponentensystem aufbewahrt, bevor sie am gewünschten Ort (z.B. bei oder in einem Loch oder Spalt, wie Bohrloch) miteinander vermischt werden.

Die erfindungsgemäßen härtbaren Massen und insbesondere Kunstharz-Befestigungssysteme sind dann als Mehr-Komponentensysteme (z.B. Mehrkomponentenkit) vorgesehen und werden auch als solche verwendet.

Unter einem Mehrkomponentenkit ist insbesondere ein Zwei- oder (ferner) Mehrkomponentenkit (vorzugsweise ein Zweikomponentenkit) mit einer Komponente (A), welche ein oder mehrere Reaktiv-Kunstharze auf Basis radikalisch härtbarer (olefinische Bindungen aufweisender) Reaktionskunstharze beinhaltet, wie oben und unten beschrieben, und den jeweils zugehörigen Härter als Komponente (B) wie oben und nachfolgend definiert, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass ihre Bestandteile während der Lagerung nicht (insbesondere nicht unter Aushärtung) miteinander reagieren können, vorzugsweise so, dass ihre Bestandteile vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen, beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder insbesondere Zweikomponenten¬kar¬tuschen (die ebenfalls besonders bevorzugt sind), in deren Kammern die mehreren oder vorzugsweise zwei Komponenten (insbesondere (A) und (B)) des erfindungsgemäßen Kunstharz-Befestigungssystems mit oben und nachstehend genannten Zusammensetzungen zur Aufbewahrung vor der Nutzung enthalten sind, wobei vorzugsweise auch ein Statikmischer zum entsprechenden Kit gehört.

Der oder die erfindungsgemäß zu verwendenden radikalisch härtbaren Reaktivverdünner, d.h. Oligoalkylenglykoldi(meth)acrylate (bevorzugt) mit im Mittel mehr als zwei Alkylenglykoleinheiten je Molekül und/oder alkoxylierte Tri-, Tetra- und Pentamethacrylate, oder Mischungen von zwei oder mehr davon, wie jeweils in Anspruch 1 oder einem der abhängigen Ansprüche definiert, sind dabei dann vorzugsweise in Komponente (A) vorgesehen.

Die erfindungsgemäßen Kunstharz-Befestigungssystemen (vorzugsweise können folglich vorzugsweise als Zwei- oder Mehr-Komponentensysteme (Mehrkomponentenkit) vorgesehen sein und auch verwendet werden. Zweikomponentige Systeme können auch solche sein, die eine Komponente z.B. in verkapselter Form in der anderen Komponente beinhalten.

Insbesondere handelt es sich bei den Kunstharz-Befestigungssystemen um Zwei-Komponentensysteme, in denen das Gewichts-verhältnis von Komponente A zu Komponente B bei 99 : 1 bis 1 : 99, bei 99 : 1 bis 50 : 50, bei 99 : 1 bis 60 : 40 oder bei 99 : 1 bis 70 : 30 liegt.

Die Verwendung eines erfindungsgemäßen Kunstharz-Befestigungssystem am gewünschten Einsatzort oder das Verfahren unter dieser Verwendung erfolgt insbesondere durch Mischen der zugehörigen (vor Mischung reaktionshemmend separierten) Komponenten, insbesondere nahe bei und/oder direkt vor einem Loch oder (beispielsweise insbesondere bei Verwendung von Kartuschen mit Statikmischern) direkt vor und/oder (insbesondere beim Zerstören entsprechender Patronen oder Ampullen) innerhalb eines Loches oder Spaltes, z.B. einem Bohrloch.

Die Einbringung (Einklebung) des oder der Verankerungsmittel(s) erfolgt vorzugsweise bereits kurze Zeit, vorzugsweise 30 Minuten oder weniger, nach dem Mischen der Komponenten des erfindungsgemäßen Kunstharz-Befestigungssystems. Mit der Mischung und Einbringung der Komponenten auf oder in die gewünschten Stellen, an denen Verankerungsmittel befestigt werden sollen, beginnen mehrere, im Wesentlichen parallel und/oder nur mit geringer zeitlicher Versetzung ablaufende Reaktionen. Die endgültige Aushärtung erfolgt in situ.

Unter "Einkleben" ist insbesondere eine (stoff- und/oder formschlüssige) Befestigung von Verankerungsmitteln aus Metall (z.B. Hinterschneidanker, Gewindestangen, Schrauben, Bohranker, Bolzen) oder ferner aus einem anderen Material, wie Kunststoff oder Holz, in festen (vorzugsweise bereits als solche fertiggestellten) Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder

Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassadenelemente oder andere Bauelemente befestigt werden.

Wo von "Gemischen von zwei oder mehr davon" die Rede ist, beinhaltet dies insbesondere Gemische von mindesten einem der genannten Bestandteile, die als bevorzugt hervorgehoben sind, mit ein oder mehreren anderen, insbesondere ein oder mehreren ebenfalls als bevorzugt gekennzeichneten Komponenten.

"Als solche fertiggestellt" bedeutet insbesondere, dass die Substrate bis auf mögliche Oberflächenmodifikationen (wie Beschichtung, z.B. Verputzen oder Lackieren) oder dergleichen bereits fertiggestellt (z.B. als Bausteine oder Mauern) und nicht erst gleichzeitig mit dem Verklebungsmittel fertiggestellt werden oder aus diesem bestehen. Mit anderen Worten: Das Verklebungsmittel ist dann nicht selbst bereits fertiggestelltes Substrat.

Spezifische Ausführungsformen der Erfindung betreffen die in den Ansprüchen aufgeführten Varianten - die Ansprüche werden hier daher durch Bezugnahme aufgenommen.

Die Figuren zeigen:

Fig. 1: Druckfestigkeiten und Druckmodule der Harze aus Beispiel 1 in Abhängigkeit der mittleren Zahl n der Ethylenoxideinheiten der Reaktivverdünner aus Beispiel 1;

Fig. 2: Biegezugfestigkeiten und Biegezugmodule der Harze aus Beispiel 1 in Abhängigkeit der mittleren Zahl n der Ethylenoxideinheiten der Reaktivverdünner aus Beispiel 1;

Fig. 3: Verbundspannungen der Harze aus Beispiel 1 in Abhängigkeit der mittleren Zahl n der Ethylenoxideinheiten der Reaktivverdünner aus Beispiel 1;

Fig. 4: Vergleich Verbundspannung im Falle schlechter Durchmischung (verkürzter Statikmischer) und normaler Durchmischung für die Harze aus Beispiel 1 in Abhängigkeit der mittleren Zahl n der Ethylenoxideinheiten der Reaktivverdünner aus Beispiel 1.

Die eingefügten Linien sind nur zur Trendveranschaulichung zu verstehen.

Die nachfolgenden Beispiele dienen als spezielle Ausführungsformen der Illustration der Erfindung, ohne ihren Umfang einzuschränken.

Beispiel 1: Erfindungsgemäße und Vergleichs-Injektionsmörtel mit Reaktivverdünnern

Zweikomponentige Kunstharz-Befestigungssysteme wurden

Rezepturen für Befestigungssysteme:

| **Kunstharzkomponente** | |
|---|---|
| Rohstoff | Anteil [%] |
| Ethoxyliertes Bisphenol-A-dimethacrylat | 25 |
| Reaktivverdünner* | 15 |
| Inhibitorenmischung (ausgewählt aus t-BBC, Hydrochinon und/oder Tempol) | 0,06 |
| Aminbeschleuniger | 0,5 |
| Additive | 0,94 |
| Portlandzement | 25 |
| Quarzmehl 0,05-0,2 mm | 31,5 |
| pyrogene Kieselsäure | 2 |
| Gesamt | 100 |
| | |

(fortgesetzt)

| **Härter** | |
|---|---|
| Rohstoff | Anteil [%] |
| Wasser demineralisiert | 30 |
| phlegmatisiertes Dibenzoylperoxid (33 %) | 42 |
| Quarzsand | 26,5 |
| Additive und Verdicker | 1,5 |
| | |
| Gesamt | 100 |
| )* Als Reaktivverdünner wurden folgende eingesetzt | |

| Reaktivverdünner | Vergleich oder erfindungsgemäß | Viskosität [mPa*s] | (ggf. mittlere) Zahl der Ethylenoxideinheiten in Formel I (n) |
|---|---|---|---|
| Ethylenglykoldimethacrylat (EGDMA) | Vergleich | 3-9 | 1 |
| Diethylenglykoldimethacrylat (DEGDMA) | Vergleich | 10 | 2 |
| TIEGDMA | erfindungsgemäß | 5-16 | 3 |
| TTEGDMA | erfindungsgemäß | 9-15 | 4 |
| SR210 (Sartomer) | Erfindungsgemäß, am stärksten bevorzugt | 13-16 | 4,5 |
| PEG400DMA | erfindungsgemäß | 20-70 | 9 |
| PEG600DMA | erfindungsgemäß | 60-80 | 13 |

Die Viskositätsangeben sind Herstellerangeben und beziehen sich auf 25 °C.

Um schlechte Mischungsverhältnisse zu simulieren, wurden die Kunstharzkomponente und der Härter im Volumenverhältnis 5 : 1 in separate Kartuschenkammern einer handelsüblichen fischer-Shuttle-Kartusche eingefüllt und in Bohrlöcher über einen normalen oder einen (von normalerweise acht) auf drei Windungen verkürzten Statikmischer FIS V (fischerwerke GmbH & CO KG, Waldachtal, Deutschland) eingefüllt. Dies simuliert schlechte Mischungsverhältnisse, wie sie beispielsweise durch während der Lagerung entstehende Luftblasen oder während der Lagerung steigende Viskosität hervorgerufen werden können.

Die Figuren 1 und 2 zeigen die Druckfestigkeiten und Druckmodule (Fig. 1) bzw. die Biegezugfestigkeiten und das Biegezugmodul (Fig. 2) der Harze nach dem Aushärten in Abhängigkeit von der mittleren Zahl n der Ethylenoxideinheiten.

Die Werte nehmen mit zunehmender Anzahl n der Ethylenoxideinheiten ab, doch finden sich auch bei n = 13 noch akzeptable und nutzbare Werte.

Die entsprechenden und weitere Messwerte sind den folgenden Tabellen zu entnehmen:
Die Zugfestigkeit und der Zugmodul werden bestimmt an Schulterstäben des Probekörpertyps 1 BA gemäß DIN EN ISO 527, die Druckfestigkeit und der Druckmodul werden gemessen nach DIN EN ISO 604, die Biegezugfestigkeit und der Biegezugmodul werden gemessen nach DIN EN ISO 178, jeweils an Proben nach 7 d Aushärtung bei 23 °C.

Die Ermittlung der Verbundspannung erfolgt durch 5 Setzversuche mit Ankerstangen M12 in Beton (C20/C25) mit einer Setztiefe von 95 mm und einem Bohrlochdurchmesser von 14 mm nach einer Aushärtezeit von 60 min bei 20 °C und einem anschließenden Auszugsversuch.

| n | Zugfestigkeit nach 24 h [MPa] | Zugmodul [GPa] | Dehnung bei Zugfestigkeit [%] |
|---|---|---|---|
| 1 | 11,9 | 3,5 | 0,5 |
| 2 | 11,8 | 3,3 | 0,5 |
| 3 | 12,6 | 3,3 | 0,7 |
| 4 | 12,3 | 2,9 | 0,8 |
| 4,5 | 12,5 | 3,0 | 0,8 |
| 9 | 10,4 | 2,2 | 0,8 |
| 13 | 9,0 | 2,0 | 0,6 |
| | | | |

| n | Druckfestigkeit nach 24 h [MPa] | Druckmodul [GPa] | Stauchung bei Druckfestigkeit [%] |
|---|---|---|---|
| 1 | 69,6 | 1,28 | 8,8 |
| 2 | 70,2 | 1,30 | 10,5 |
| 3 | 65,0 | 1,23 | 10,0 |
| 4 | 64,8 | 1,20 | 11,4 |
| 4,5 | 64,5 | 1,22 | 12,8 |
| 9 | 44,2 | 0,67 | 12,2 |
| 13 | 38,6 | 0,80 | 11,5 |
| | | | |

Fig. 3 zeigt die Verbundspannung in Abhängigkeit von der mittleren Zahl n der Ethylenoxideinheiten, Auch hier findet sich mit zunehmender Größe von n eine Abnahme.

Die entsprechenden und weitere Messwerte sind der folgenden Tabelle zu entnehmen:

| n | Biegezugfestigkeit nach 24 h [MPa] | Biegezugmodul [MPa] | Biegezugmodul [GPa] | Biegung bei Biegezugfestigkeit [%] |
|---|---|---|---|---|
| 1 | 19,7 | 4228 | 4,2 | 0,6 |
| 2 | 21,1 | 4013 | 4,0 | 0,7 |
| 3 | 21,6 | 3433 | 3,4 | 0,9 |
| 4 | 20,1 | 3405 | 3,4 | 0,9 |
| 4,5 | 20,7 | 3335 | 3,3 | 0,9 |
| 9 | 16,5 | 2258 | 2,3 | 1,2 |
| 13 | 15,5 | 2158 | 2,2 | 1,2 |

Fig. 4 zeigt die Messung der Verbundspannung im Falle schlechter Durchmischung (Fig. 4 B - verkürzter Statikmischer) im Vergleich zur guten Durchmischung (Fig. 4 A - unverkürzter Statikmischer). Hier zeigt sich im Bereich

von n gleich 2,5 bis ungefähr n gleich 9 ein Plateau. Dies zeigt, dass unter den Bedingungen schlechter Durchmischung erfindungsgemäße Kunstharz-Befestigungssysteme überraschenderweise Vorteile haben können gegenüber solchen mit 1 oder 2 Ethylenoxideinheiten (EGDMA oder DEGDMA).

Die entsprechenden Messwerte lassen sich der nachfolgenden Tabelle entnehmen:

| n | Verbundspannung [N/mm$^2$] Normale Durchmischung | Verbundspannung [N/mm$^2$] Schlechte Durchmischung |
|---|---|---|
| 1 | 26,5 | 12,6 |
| 2 | 26,3 | 12,5 |
| 3 | 26,7 | 16,0 |
| 4 | 25 | 14,0 |
| 4,5 | 24,6 | 17,1 |
| 9 | 20,6 | 13,0 |
| 13 | 18,6 | 10,0 |

Beispiel 2: Herstellung eines kennzeichnungsfreien Urethanmethacrylat-Reaktionsharzes

In einem 1000-ml-Glaskolben mit Rückflusskühler mit Trockenrohr, Rührer, Tropftrichter und Thermometer wurden 170,94 g HPMA, 268,86 g SR210, 1,07 g KAT 20 %ig in SR210, 0,3 g STAB1 5 %ig in SR210, 1,2 g STAB2 10 %ig in HPMA vorgelegt und im Ölbad auf 60 °C aufgeheizt. Das PMDI (Desmodur VKS 20, Bayer AG; durchschnittliche Funktionalität ungefähr 2,7) wurde so langsam zur Reaktionsmischung zugetropft, dass die Temperatur nicht über 90 °C stieg. Nach vollständiger Zugabe des PMDI wurde bei 80 °C weitergerührt, um die Reaktion zu vervollständigen. Die vollständige Umsetzung (Freiheit von durch IR-Spektroskopie nachweisbaren Isocyanatgruppen) wurde mittels FT-IR überprüft. Der Gehalt an freiem HPMA betrug < 0,3 % (rechnerisch ermittelt und durch GC-Analyse bestätigt).

Beispiel 3: Herstellung eines kennzeichnungsfreien Befestigungssystems

| **Kunstharzkomponente** | |
|---|---|
| Rohstoff | Anteil [%] |
| UM-Harz Beispiel 2 | 25 |
| SR210 | 15 |
| Inhibitorenmischung (ausgewählt aus t-BBC, Hydrochinon und/oder Tempol) | 0,06 |
| Aminbeschleuniger | 0,5 |
| Additive | 0,94 |
| Quarzmehl 0,05-0,2 mm | 56,5 |
| pyrogene Kieselsäure | 2 |
| Gesamt | 100 |
| | |
| **Härter** | |
| Rohstoff | Anteil [%] |
| Wasser demineralisiert | 30 |
| phlegmatisiertes Dibenzoylperoxid (33 %) | 17 |
| Füllstoff | 51 |
| Additive und Verdicker | 2 |

(fortgesetzt)

| **Härter** | |
|---|---|
| Rohstoff | Anteil [%] |
| | |
| Gesamt | 100 |

In eine handelsübliche fischer Multibondkartusche (Volumenverhältnis ca. 5:1) werden 445 g des Mörtels und 85 g des Härters eingefüllt. Mit dem Injektionssystem werden 5 Setzversuche mit Ankerstangen M12 in Beton (C20/C25) mit einer Setztiefe von 95 mm und einem Bohrlochdurchmesser von 14 mm durchgeführt und nach einer Aushärtezeit von 60 min bei 20 °C einem Auszugsversuch unterworfen. Es werden sehr gute Verbundspannungen von 22 $N/mm^2$ erhalten.

Beispiel 4: Herstellung eines kennzeichnungsfreien Befestigungssystems, das ein Epoxyacrylat als Reaktionsharz enthält.

| **Kunstharzkomponente** | |
|---|---|
| Rohstoff | Anteil [%] |
| Epoxyacrylat CN159 (Sartomer) | 20 |
| SR210 | 20 |
| Inhibitorenmischung (ausgewählt aus t-BBC, Hydrochinon und/oder Tempol) | 0,001 |
| Aminbeschleuniger | 3 |
| Additive | 0,999 |
| Quarzmehl 0,05-0,2 mm | 54 |
| pyrogene Kieselsäure | 2 |
| Gesamt | 100 |
| | |
| **Härter** | |
| Rohstoff | Anteil [%] |
| Wasser demineralisiert | 35 |
| phlegmatisiertes Dibenzoylperoxid (33 %) | 2,95 |
| Füllstoff | 60 |
| Additive und Verdicker | 2,05 |
| | |
| Gesamt | 100 |

Mörtel und Härter werden in eine handelsübliche fischer Shuttlekartusche (Volumenverhältnis ca. 3:1) abgefüllt. Es werden gute Verbundspannungen von 18 $N/mm^2$ erhalten.

## Patentansprüche

1. Radikalisch härtbare Kunstharz-Befestigungssysteme, welche ein oder mehrere Reaktivverdünner ausgewählt aus radikalisch härtbaren Oligoalkylenglykoldi(meth)acrylaten beinhalten **dadurch gekennzeichnet, dass**

a) es sich bei den genannten radikalisch härtbaren Oligoalkylenglykoldi(meth)acrylaten um solche der Formel I,

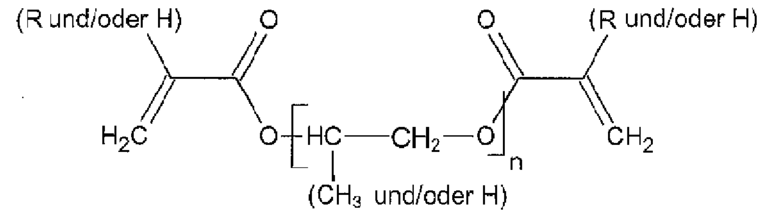

(I)

worin die Reste R unabhängig voneinander für $C_1$-$C_7$-Alkyl stehen, insbesondere für Methyl, und worin n für durchschnittlich 4,2 bis 7 steht, handelt, oder
b) dass es sich bei den genannten Reaktivverdünnern in Form von radikalisch härtbaren Oligoalkylenglykoldi(meth)acrylaten um solche handelt, die ausgewählt sind aus Oligoalkylenglykoldi(meth)acrylaten mit im Mittel mehr als zwei Alkylenglykoleinheiten je Molekül und aus alkoxylierten Tri-, Tetra- und Pentamethacrylaten, und die Kunstharz-Befestigungssysteme auf Reaktiv-Kunstharzen basieren, ausgewählt aus solchen der Formel

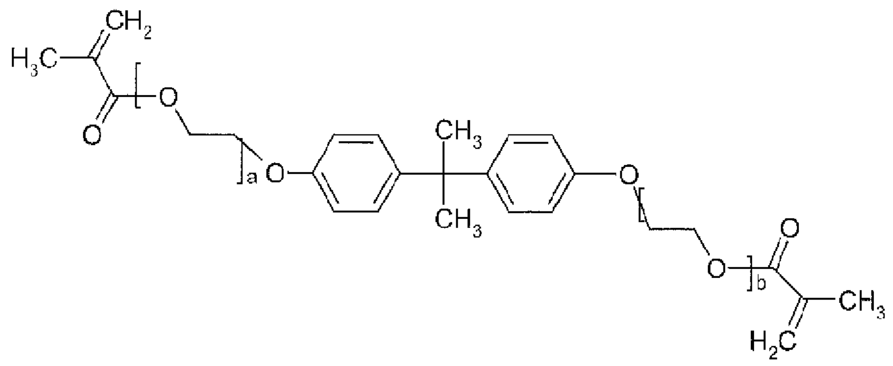

worin a und b jeweils unabhängig voneinander für eine Zahl größer oder gleich 0 stehen mit der Maßgabe, dass vorzugsweise mindestens einer der Werte größer als 0 ist;
und aus Urethan(meth)acrylaten, die aus der Umsetzung eines vorverlängerten monomeren Di- oder Polyisocyanats und/oder aus der Umsetzung eines polymeren Di- oder Polyisocyanats mit Hydroxyethyl- oder Hydroxypropyl(meth)acrylat resultieren.

**2.** Radikalisch härtbares Kunstharz-Befestigungssystem nach Anspruch 1, Variante a), wobei in Formel I n für 4,5 bis 6 steht.

**3.** Radikalisch härtbares Kunstharz-Befestigungssystem nach Anspruch 1, Variante b), wobei es sich bei den bei der Herstellung von Urethan(meth)acrylaten verwendeten Di- oder Polyisocyanaten um PMDI und/oder MDI handelt.

**4.** Radikalisch härtbares Kunstharzbefestigungssystem nach Anspruch 1, Variante a), **dadurch gekennzeichnet, dass** es auf Reaktiv-Kunstharzen basiert, ausgewählt aus (Meth)Acrylat-oder (Meth)-Acrylamid-Monomere,n wie Acrylsäure und/oder Methacrylsäure oder vorzugsweise deren Ester oder Amide, insbesondere (Meth)Acrylate wie Mono-, Di-, Tri- oder Poly (meth)acrylate gegebenenfalls jeweils propoxyliertem oder ethoxyliertem aromatischem Diol-, wie Bisphenol-A-, Bisphenol-F- oder Novolak-(insbesondere di-) (meth)-acrylat), Epoxy(meth)acrylate (insbesondere in Form von Umsetzungsprodukten von Di- oder Polyepoxiden, z.B. Bisphenol-A-, Bisphenol-F- oder Novolak-di- und/oder -poly-glycidylethern, mit ungesättigten Carbonsäuren, z.B. $C_2$-$C_7$-Alkorcarbonsäuren, wie insbesondere (Meth)acrylsäure), Urethan- und/oder Harnstoff(meth)acrylate und ungesättigten Polyesterharze basieren; oder ein Gemisch von zwei oder mehr dieser härtbaren ungesättigten organischen Komponenten beinhaltet, und weiter einen Härter und keinen oder vorzugsweise ein oder mehrere weitere Inhaltsstoffe beinhalten.

**5.** Radikalisch härtbares Kunstharzbefestigungssystem nach Anspruch 1, Variante b), **dadurch gekennzeichnet, dass** es auf Reaktiv-Kunstharzen basiert, ausgewählt aus solchen der Formel

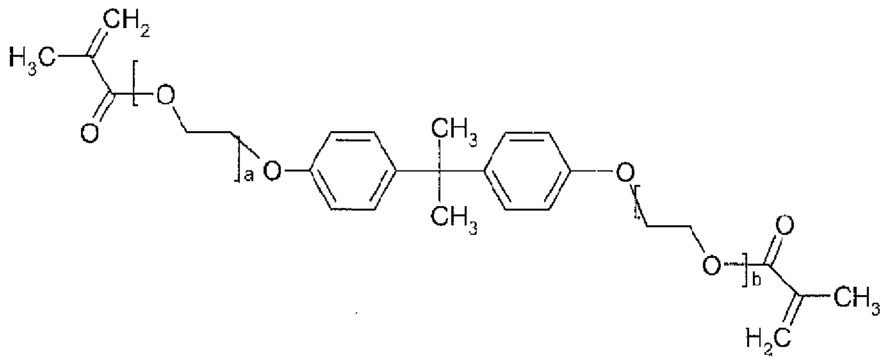

worin a und b jeweils unabhängig voneinander 1 oder größer sind.

6. Radikalisch härtbares Kunstharzbefestigungssystem nach einem der Ansprüche 1 bis 5, **dadurch gekennzeichnet, dass** es den oder die Reaktiwerdünner in einem Gewichtsanteil von 0,1 bis 90 Gew.-%, insbesondere von 0,5 bis 75 Gew.-%, insbesondere von 1 bis 40 Gew.-%; und ein bzw. das Reaktiv-Kunstharz in einem Gewichtsanteil von 1 bis 99,5 %, wie etwa von 10 bis 90, z.B. 15 bis 80 %, beinhaltet, und vorzugsweise weitere Inhaltsstoffe in einer Menge von insgesamt bis zu 80, vorzugsweise zwischen 0,01 und 65 Gew.-%, vorliegen, beinhaltet

7. Radikalisch härtbares Kunstharzbefestigungssystem nach einem der Ansprüche 1 bis 6, **dadurch gekennzeichnet, dass** als radikalisch härtendes ungesättigtes Reaktiv-Kunstharz Urethanmethacrylate verwendet werden, die erhältlich sind, indem als Edukt für die Herstellung des Vinylesterurethan-, insbesondere U(M)A-Harzes ein Isocyanat oder eine Isocyanatmischung mit einer mittleren Funktionalität von mehr als 2, die auch durch Mischung von Isocyanaten einer Funktionalität unter zwei mit Isocyanaten einer Funktionalität größer 2 erzielt werden kann, beispielsweise einer Funktionalität von $\geq 2,1$, vorzugsweise von $\geq 2,7$, insbesondere von 2,1 oder 2,7 bis 5, zum Beispiel von 2,2 oder 2,7 bis 4, vorteilhaft z.B. von 2,3 oder 2,7 bis 3,5, mit einem mindestens eine C-C-Doppelbindung (nicht konjugierte - olefinische Bindung) aufweisenden aliphatischen Alkohol, insbesondere einem Hydroxyalkyl(meth)acrylat, vorzugsweise Hydroxyniederalkyl-(meth)acrylat, wie Hydroxyethyl(meth)acrylat oder insbesondere Hydroxypropyl(meth)acrylat, vorzugsweise 2-Hydroxypropylmethacrylat (HPMA), umgesetzt wird.

8. Radikalisch härtbares Kunstharzbefestigungssystem nach einem der Ansprüche 1 bis 7, **dadurch gekennzeichnet, dass** es einen oder mehrere weitere Reaktivverdünner beinhaltet, ausgewählt aus Mono-, Di-, Tri- oder Poly(meth)acrylaten, wie Hydroxyalkyl-(meth)acrylaten, wie Hydroxypropylmethacrylat, sonstigen (Meth)acrylsäureestern ausgewählt aus (Meth)acrylsäuremethylester, 1,4-Butandioldi(meth)acrylat, 1,2-Ethandioldi(meth)acrylat, Diethylglykoldi(meth)acrylat, Trimethylolpropantri(meth)acrylat, oder Polyethylenglykoldi(meth)acrylat; und Styrolen, wie Styrol, $\alpha$-Methylstyrol, Vinyltoluol, tert.-Butylstyrol und/oder Divinylbenzol, oder Gemischen von zwei oder mehr davon.

9. Radikalisch härtbares Kunstharzbefestigungssystem nach einem der Ansprüche 1 bis 8, **dadurch gekennzeichnet, dass** es als radikalisch härtendes ungesättigtes Reaktiv-Kunstharz eines ohne cyclische ungesättigte Gruppen beinhaltet.

10. Radikalisch härtbares Kunstharzbefestigungssystem nach einem der Ansprüche 1 bis 9, **dadurch gekennzeichnet, dass** es einen Härter beinhaltet mit einem Peroxidgehalt < 1 Gew.-% bezogen auf den Härter, vorzugsweise mit einem Peroxidgehalt < 1 Gew.-% bezogen auf alle Komponenten.

11. Verwendung eines Kunstharz-Befestigungssystems nach einem der Ansprüche 1 bis 10 als Klebemittel in der Befestigungstechnik, insbesondere zur Befestigung von Verankerungsmitteln in Bohrlöchern oder Spalten.

12. Verfahren zur Herstellung eines Kunstharz-Befestigungssystems nach einem der Ansprüche 1 bis 10, **dadurch gekennzeichnet, dass** den übrigen Bestandteilen, insbesondere einer Kunstharz-Komponente bei einem Mehrkomponentensystem, Reaktivverdünner wie in Anspruch 1 definiert zugemischt werden und insbesondere, im Falle von Mehrkomponentensystemen in separaten Kompartimenten, in Verpackungen abgefüllt werden.

13. Verfahren zur Befestigung von beispielsweise Verankerungsmitteln in Bohrlöchern oder Spalten unter Verwendung der Kunstharz-Befestigungssysteme nach einem der Ansprüche 1 bis 10, die mindestens einen der genannten zu

verwendenden radikalisch härtbaren Reaktivverdünner beinhalten, beinhaltend ein Mischen der zugehörigen Komponenten, insbesondere nahe bei und/oder direkt vor einem Loch oder direkt vor und/oder innerhalb eines Loches oder Spaltes, z.B. einem Bohrloch, und die Einklebung eines oder der Verankerungsmittel(s).

## Claims

1. Free-radical-hardenable synthetic resin fixing systems which include one or more reactive diluents selected from free-radical-hardenable oligoalkylene glycol di(meth)acrylates, **characterised in that**

a) the said free-radical-hardenable oligoalkylene glycol di(meth)acrylates are those of the formula I,

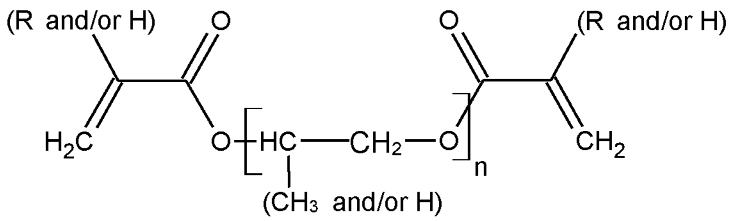

(I)

wherein the radicals R independently of one another denote $C_1$-$C_7$alkyl, especially methyl, and wherein n denotes on average from 4.2 to 7, or

b) the said reactive diluents in the form of free-radical-hardenable oligoalkylene glycol di(meth)acrylates are those selected from oligoalkylene glycol di(meth)acrylates having on average more than two alkylene glycol units per molecule and from alkoxylated tri-, tetra- and penta-methacrylates, and the synthetic resin fixing systems are based on reactive synthetic resins selected from those of the formula

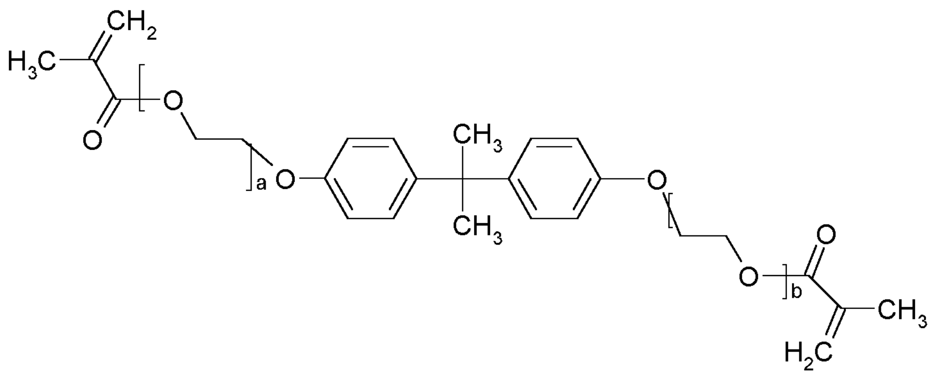

wherein a and b each independently of the other denote a number greater than or equal to 0, with the proviso that preferably at least one of the values is greater than 0; and from urethane (meth)acrylates which result from the reaction of a prelengthened monomeric di- or poly-isocyanate and/or from the reaction of a polymeric di- or poly-isocyanate with hydroxylethyl- or hydroxypropyl-(meth)acrylate.

2. Free-radical-hardenable synthetic resin fixing system according to claim 1, variant a), wherein in formula I n denotes from 4.5 to 6.

3. Free-radical-hardenable synthetic resin fixing system according to claim 1, variant b), wherein the di- or poly-isocyanates used in the production of urethane (meth)acrylates are PMDI and/or MDI.

4. Free-radical-hardenable synthetic resin fixing system according to claim 1, variant a), **characterised in that** it is based on reactive synthetic resins selected from (meth)acrylate or (meth)acrylamide monomers, such as acrylic acid and/or methacrylic acid or preferably esters or amides thereof, especially (meth)acrylates such as mono-, di-, tri- or poly-(meth)acrylates, optionally in each case propoxylated or ethoxylated aromatic diol-, such as bisphenol-A-, bisphenol-F- or novolak-(especially di-)(meth)-acrylate), epoxy(meth)acrylates (especially in the form of reaction products of di- or poly-epoxides, for example bisphenol-A-, bisphenol-F- or novolak-di- and/or -poly-glycidyl ethers, with unsaturated carboxylic acids, for example $C_2$-$C_7$alkenecarboxylic acids, such as especially (meth)acrylic acid), urethane- and/or urea-(meth)acrylates and unsaturated polyester resins; or a mixture of two or more of such hardenable unsaturated organic components, and also a hardener and no further ingredients or preferably one or more further ingredients.

**5.** Free-radical-hardenable synthetic resin fixing system according to claim 1, variant b), **characterised in that** it is based on reactive synthetic resins selected from those of the formula

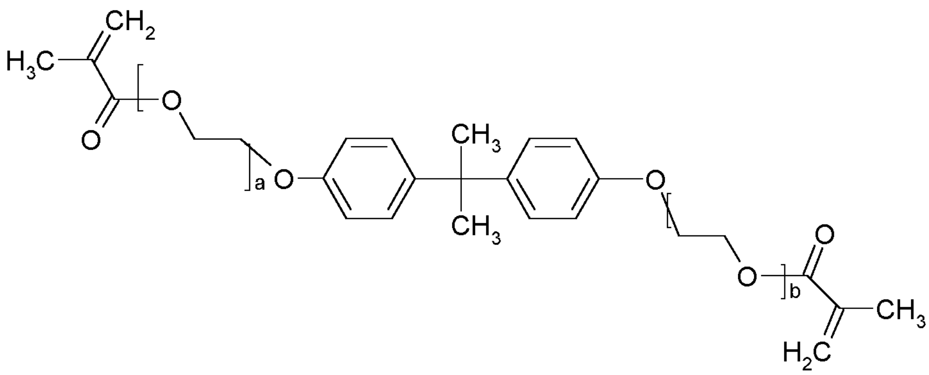

wherein a and b each independently of the other are 1 or more.

**6.** Free-radical-hardenable synthetic resin fixing system according to any one of claims 1 to 5, **characterised in that** it includes the reactive diluent(s) in a proportion by weight of from 0.1 to 90 % by weight, especially from 0.5 to 75 % by weight, especially from 1 to 40 % by weight; and a/the reactive synthetic resin in a proportion by weight of from 1 to 99.5 %, such as, for example, from 10 to 90 %, for example from 15 to 80 %, and preferably further ingredients in an amount of in total up to 80 % by weight, preferably between 0.01 and 65 % by weight.

**7.** Free-radical-hardenable synthetic resin fixing system according to any one of claims 1 to 6, **characterised in that** as free-radical-hardening unsaturated reactive synthetic resin there are used urethane methacrylates which are obtainable by reacting, as starting material for the production of the vinyl ester urethane resin, especially a U(M)A resin, an isocyanate or an isocyanate mixture having a mean functionality of more than 2, which can also be achieved by mixing isocyanates having a functionality of less than two with isocyanates having a functionality of greater than 2, for example a functionality of ≥ 2.1, preferably ≥ 2.7, especially from 2.1 or 2.7 to 5, for example from 2.2 or 2.7 to 4, advantageously, for example, from 2.3 or 2.7 to 3.5, with an aliphatic alcohol having at least one C-C double bond (non-conjugated - olefinic bond), especially a hydroxyalkyl (meth)acrylate, preferably hydroxy-lower alkyl (meth)acrylate, such as hydroxyethyl (meth)acrylate or especially hydroxypropyl (meth)acrylate, preferably 2-hydroxypropyl methacrylate (HPMA).

**8.** Free-radical-hardenable synthetic resin fixing system according to any one of claims 1 to 7, **characterised in that** it includes one or more further reactive diluents, selected from mono-, di-, tri- or poly-(meth)acrylates, such as hydroxyalkyl (meth)-acrylates, such as hydroxypropyl methacrylate, other (meth)acrylic acid esters selected from (meth)acrylic acid methyl ester, 1,4-butanediol di(meth)acrylate, 1,2-ethanediol di(meth)acrylate, diethyl glycol di(meth)acrylate, trimethylolpropane tri(meth)acrylate or polyethylene glycol di(meth)acrylate; and styrenes, such as styrene, α-methylstyrene, vinyl toluene, tert.-butylstyrene and/or divinylbenzene, or mixtures of two or more thereof.

**9.** Free-radical-hardenable synthetic resin fixing system according to any one of claims 1 to 8, **characterised in that** as free-radical-hardening unsaturated reactive synthetic resin it includes one without cyclic unsaturated groups.

**10.** Free-radical-hardenable synthetic resin fixing system according to any one of claims 1 to 9, **characterised in that** it includes a hardener having a peroxide content of < 1 % by weight, based on the hardener, preferably having a peroxide content of < 1 % by weight, based on all components.

**11.** Use of a synthetic resin fixing system according to any one of claims 1 to 10 as an adhesive in fixing technology,

especially for fixing anchoring means in drilled holes or crevices.

12. Process for the production of a synthetic resin fixing system according to any one of claims 1 to 10, **characterised in that** reactive diluents, as defined in claim 1, are mixed with the other constituents, especially a synthetic resin component in the case of a multi-component system, and especially, in the case of multi-component systems in separate compartments, are introduced into packagings.

13. Method for fixing, for example, anchoring means in drilled holes or crevices using the synthetic resin fixing systems according to any one of claims 1 to 10, which include at least one of the mentioned free-radical-hardenable reactive diluents to be used, including mixing the associated components, especially close to and/or directly in front of a hole or directly in front of and/or inside a hole or crevice, for example a drilled hole, and bonding an/the anchoring means in place.

## Revendications

1. Systèmes de fixation au moyen de résines artificielles durcissables par voie radicalaire, qui contiennent un ou plusieurs diluants réactifs choisis parmi les di(méth)acrylates d'oligoalkylène glycols durcissables par voie radicalaire, **caractérisés en ce que**

a) lesdits di(méth)acrylates d'oligoalkylène glycols durcissables par voie radicalaire consistent en ceux de la formule I,

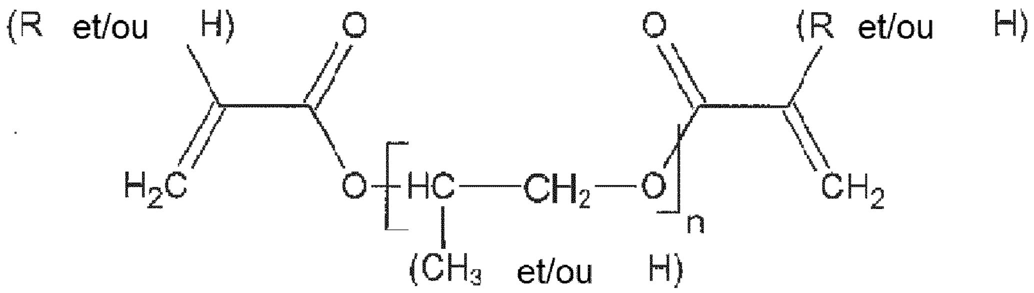

(I)

dans laquelle les radicaux R représentent indépendamment les uns des autres alkyle en $C_1$-$C_7$, notamment méthyle, et dans laquele n représente en moyenne 4,2 à 7, ou
b) lesdits diluants réactifs sous la forme de di(méth)acrylates d'oligoalkylène glycols durcissables par voie radicalaire consistent en de tels diluants qui sont choisis parmi les di(méth)acrylates d'oligoalkylène glycols contenant en moyenne plus de deux unités alkylène glycol par molécule et les tri-, tétra- et pentaméthacrylates alcoxylés, et les systèmes de fixation au moyen de résines artificielles sont à base de résines artificielles réactives, choisies parmi celles de la formule

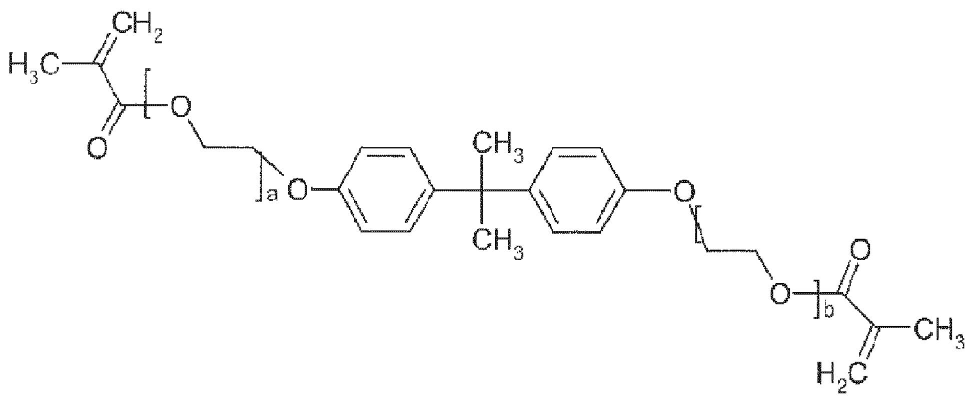

dans laquelle a et b représentent chacun indépendamment l'un de l'autre un nombre supérieur ou égal à 0, à condition qu'au moins une des valeurs soit de préférence supérieure à 0 ;
et les (méth)acrylates d'uréthane, qui résultent de la réaction d'un di- ou polyisocyanate monomère pré-allongé et/ou de la réacton d'un di- ou polyisocyanate polymère avec du (méth)acrylate d'hydroxyéthyle ou d'hydroxypropyle.

**2.** Système de fixation au moyen de résines artificielles durcissable par voie radicalaire selon la revendication 1, variante a), dans lequel n représente 4,5 à 6 dans la formule I.

**3.** Système de fixation au moyen de résines artificielles durcissable par voie radicalaire selon la revendication 1, variante b), dans lequel les di- ou polyisocyanates utilisés lors de la fabrication de (méth)acrylates d'uréthane consistent en le PMDI et/ou le MDI.

**4.** Système de fixation au moyen de résines artificielles durcissable par voie radicalaire selon la revendication 1, variante a), **caractérisé en ce qu'**il est à base de résines artificielles réactives, choisies parmi les monomères (méth)acrylate ou (méth)acrylamide, tels que l'acide acrylique et/ou l'acide méthacrylique ou de préférence leurs esters ou amides, notamment les (méth)acrylates tels que les mono-, di-, tri- ou poly(méth)acrylates, le (notamment di-)(méth)acrylate de diol aromatique éventuellement à chaque fois propoxylé ou éthoxylé, tel que de bisphénol A, de bisphénol F ou de novolaque, les époxy(méth)acrylates (notamment sous la forme de produits de réaction de di- ou polyépoxydes, p. ex. les éthers di- et/ou polyglycidyliques de bisphénol A, de bisphénol F ou de novolaque, avec des acides carboxyliques insaturés, p. ex. les acides alcène-carboxyliques en $C_2$-$C_7$, tels que notamment l'acide (méth)acrylique), les (méth)acrylates d'uréthane et/ou d'urée et les résines de polyester insaturées; ou contient un mélange de deux ou davantage de ces composants organiques insaturés durcissables, et également un durcisseur et aucun ou de préférence un ou plusieurs constituants supplémentaires.

**5.** Système de fixation au moyen de résines artificielles durcissable par voie radicalaire selon la revendication 1, variante b), **caractérisé en ce qu'**il est à base de résines artificielles réactives, choisies parmi celles de la formule

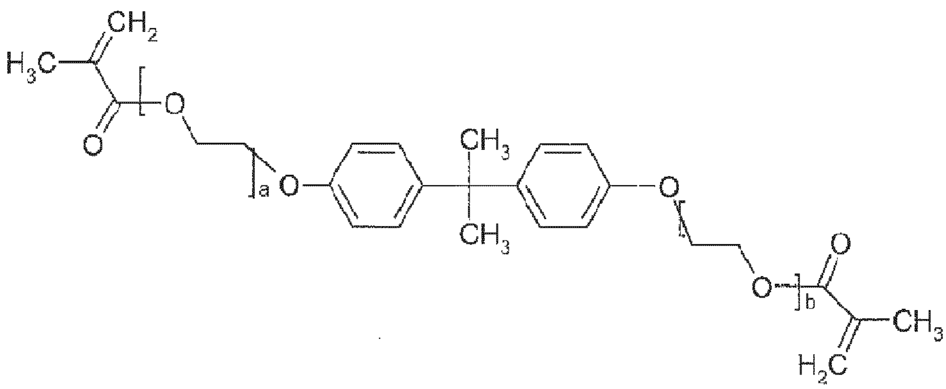

dans laquelle a et b sont chacun indépendamment l'un de l'autre 1 ou plus.

**6.** Système de fixation au moyen de résines artificielles durcissable par voie radicalaire selon l'une quelconque des revendications 1 à 5, **caractérisé en ce qu'**il contient le ou les diluants réactifs en une proportion en poids de 0,1 à 90 % en poids, notamment de 0,5 à 75 % en poids, notamment de 1 à 40 % en poids ; et une ou la résine artificielle réactive en une proportion en poids de 1 à 99,5 %, tel que par exemple de 10 à 90, p. ex. de 15 à 80 %, et contient de préférence d'autres constituants en une quantité d'au total jusqu'à 80, de préférence comprise entre 0,01 et 65 % en poids.

**7.** Système de fixation au moyen de résines artificielles durcissable par voie radicalaire selon l'une quelconque des revendications 1 à 6, **caractérisé en ce qu'**en tant que résine artificielle réactive insaturée durcissant par voie radicalaire, des méthacrylates d'uréthane sont utilisés, qui peuvent être obtenus par mise en réaction, en tant que réactif pour la fabrication de la résine d'ester de vinyle-uréthane, notamment d'U(M)A, d'un isocyanate ou d'un mélange d'isocyanates ayant une fonctionnalité moyenne supérieure à 2, qui peut également être atteinte par mélange d'isocyanates d'une fonctionnalité inférieure à deux avec des isocyanates d'une fonctionnalité supérieure à 2, par exemple d'une fonctionnalité $\geq$ 2,1, de préférence $\geq$ 2,7, notamment de 2,1 ou 2,7 à 5, par exemple de 2,2

ou 2,7 à 4, avantageusement p. ex. de 2,3 ou 2,7 à 3,5, avec un alcool aliphatique comprenant au moins une double liaison C-C (liaison oléfinique non conjuguée), notamment un (méth)acrylate d'hydroxyalkyle, de préférence un (méth)acrylate d'hydroxy-alkyle inférieur, tel que le (méth)acrylate d'hydroxyéthyle ou notamment le (méth)acrylate d'hydroxypropyle, de préférence le méthacrylate de 2-hydroxypropyle (HPMA).

**8.** Système de fixation au moyen de résines artificielles durcissable par voie radicalaire selon l'une quelconque des revendications 1 à 7, **caractérisé en ce qu'**il contient un ou plusieurs diluants réactifs supplémentaires, choisis parmi les mono-, di-, tri- ou poly(méth)acrylates, tels que les (méth)acrylates d'hydroxyalkyle, tels que le méthacrylate d'hydroxypropyle, d'autres esters de l'acide (méth)acrylique choisis parmi l'ester méthylique de l'acide (méth)acrylique, le di(méth)acrylate de 1,4-butanediol, le di(méth)acrylate de 1,2-éthanediol, le di(méth)acrylate de diéthylglycol, le tri(méth)acrylate de triméthylolpropane ou le di(méth)acrylate de polyéthylène glycol ; et les styrènes, tels que le styrène, l'$\alpha$-méthylstyrène, le vinyltoluène, le tert.-butylstyrène et/ou le divinylbenzène, ou des mélanges de deux ou davantage d'entre eux.

**9.** Système de fixation au moyen de résines artificielles durcissable par voie radicalaire selon l'une quelconque des revendications 1 à 8, **caractérisé en ce qu'**il contient en tant que résine artificielle réactive insaturée durcissant par voie radicalaire une sans groupes insaturés cycliques.

**10.** Système de fixation au moyen de résines artificielles durcissable par voie radicalaire selon l'une quelconque des revendications 1 à 9, **caractérisé en ce qu'**il contient un durcisseur ayant une teneur en peroxyde < 1 % en poids par rapport au durcisseur, de préférence ayant une teneur en peroxyde < 1 % en poids par rapport à tous les composants.

**11.** Utilisation d'un système de fixation au moyen de résines artificielles selon l'une quelconque des revendications 1 à 10 en tant qu'adhésif dans la technologie de fixation, notamment pour la fixation de moyens d'ancrage dans des trous de forage ou des fentes.

**12.** Procédé de fabrication d'un système de fixation au moyen de résines artificielles selon l'une quelconque des revendications 1 à 10, **caractérisé en ce que** des diluants réactifs tels que définis dans la revendication 1, sont incorporés dans les autres constituants, notamment un composant résine artificielle pour un système multicomposant, et notamment disposés dans des emballages, dans le cas de systèmes multicomposants dans des compartiments séparés.

**13.** Procédé de fixation par exemple de moyens d'ancrage dans des trous de forage ou des fentes utilisant les systèmes de fixation au moyen de résines artificielles selon l'une quelconque des revendications 1 à 10, qui contiennent au moins un des diluants réactifs durcissables par voie radicalaire à utiliser indiqués, contenant un mélange des composants correspondants, notamment à proximité et/ou directement devant un trou ou directement devant et/ou à l'intérieur d'un trou ou d'une fente, p. ex. d'un trou de forage, et le collage d'un ou des moyens d'ancrage.

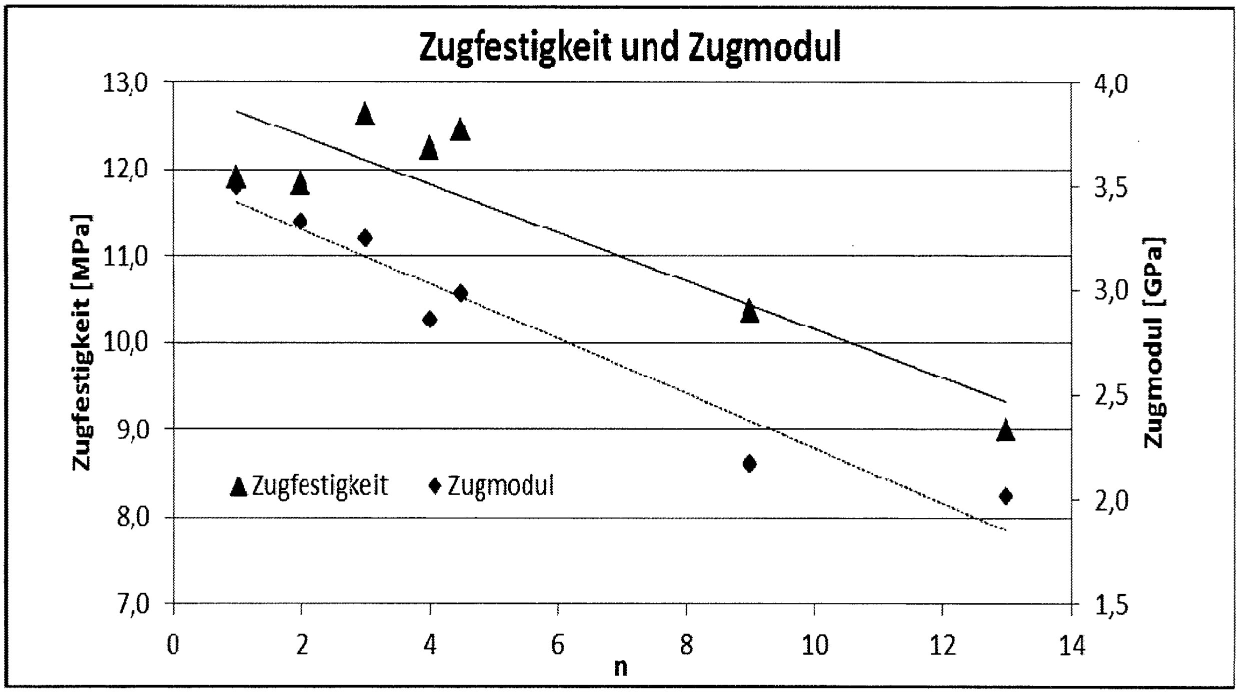
Zugfestigkeit und Zugmodul
13,0
12,0
11,0
10,0
9,0
8,0
7,0
Zugfestigkeit [MPa]
4,0
3,5
3,0
2,5
2,0
1,5
Zugmodul [GPa]
Zugfestigkeit
Zugmodul
0
2
4
6
8
10
12
14
n

Fig. 1

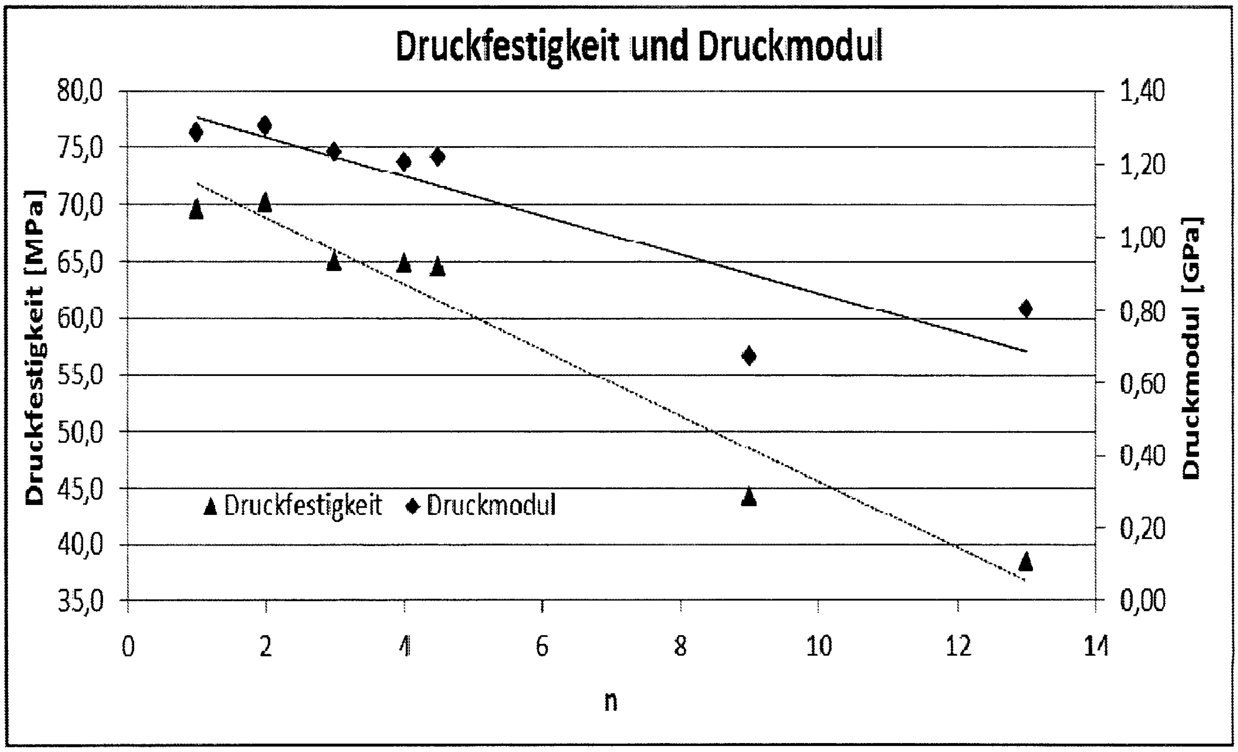
Druckfestigkeit und Druckmodul
80,0
75,0
70,0
65,0
60,0
55,0
50,0
45,0
40,0
35,0
Druckfestigkeit [MPa]
1,40
1,20
1,00
0,80
0,60
0,40
0,20
0,00
Druckmodul [GPa]
Druckfestigkeit
Druckmodul
0
2
4
6
8
10
12
14
n

Fig. 2

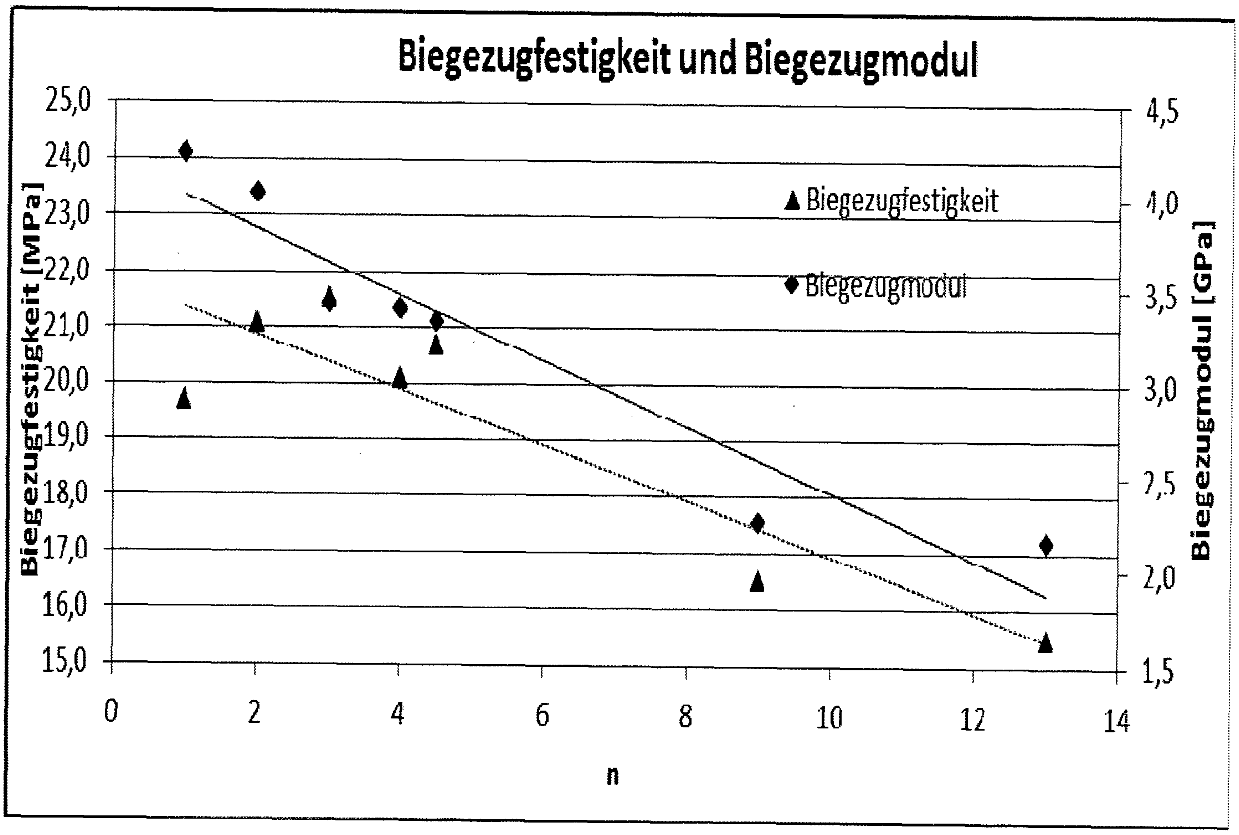

Biegezugfestigkeit und Biegezugmodul
Biegezugfestigkeit [MPa]
25,0
24,0
23,0
22,0
21,0
20,0
19,0
18,0
17,0
16,0
15,0
0
2
4
6
8
10
12
14
n
▲ Biegezugfestigkeit
◆ Biegezugmodul
Biegezugmodul [GPa]
4,5
4,0
3,5
3,0
2,5
2,0
1,5


Fig. 3

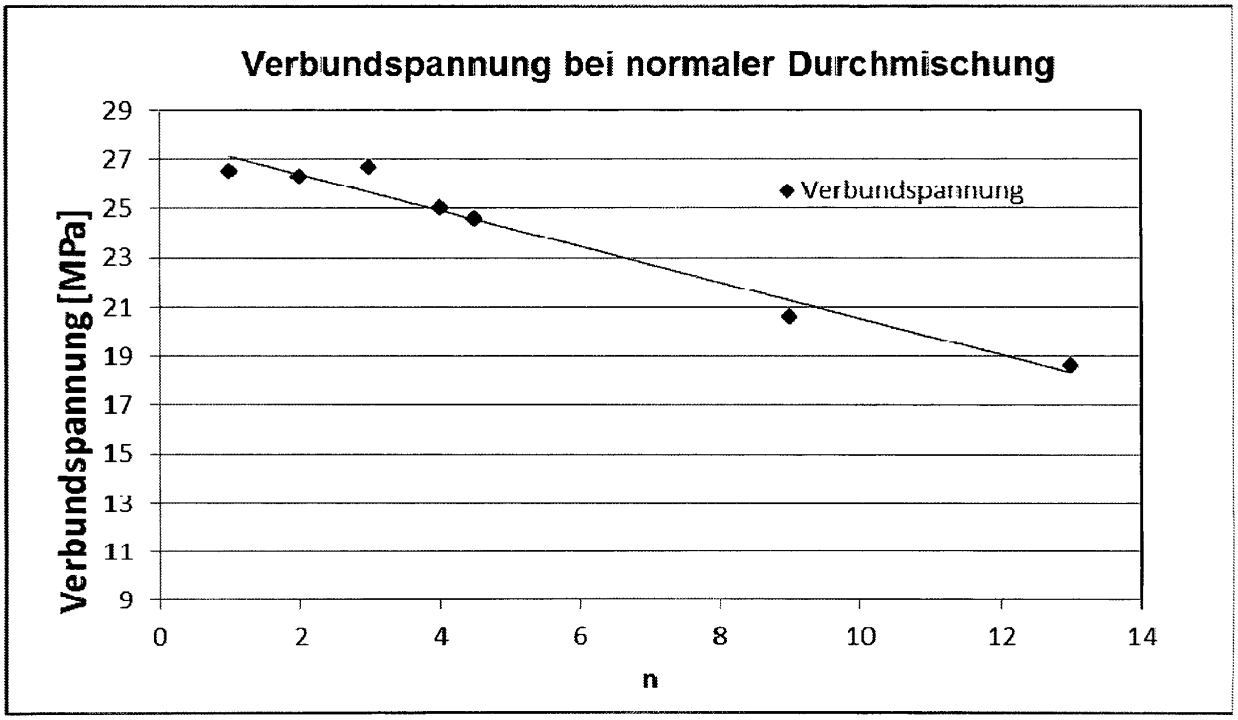
Verbundspannung bei normaler Durchmischung
Verbundspannung [MPa]
29
27
25
23
21
19
17
15
13
11
9
0
2
4
6
8
10
12
14
n
Verbundspannung

Fig. 4 A

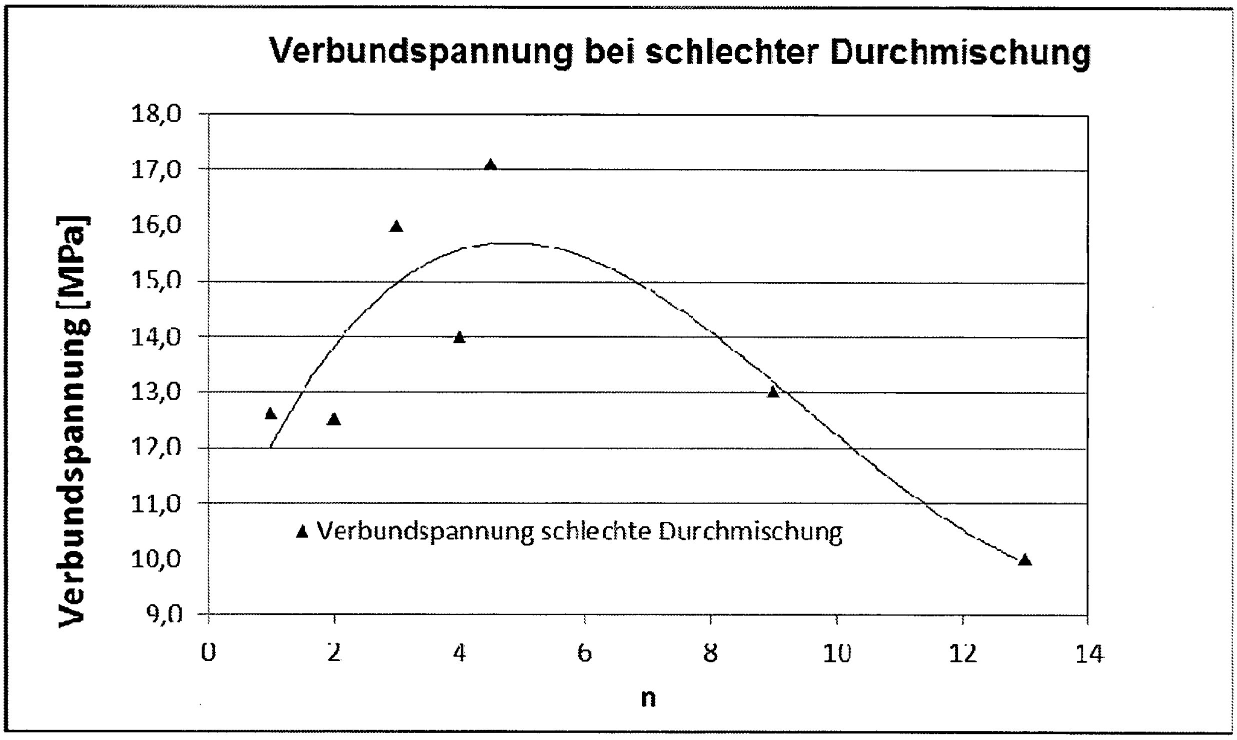
Verbundspannung bei schlechter Durchmischung
Verbundspannung [MPa]
18,0
17,0
16,0
15,0
14,0
13,0
12,0
11,0
10,0
9,0
0
2
4
6
8
10
12
14
n
Verbundspannung schlechte Durchmischung

Fig. 4 B

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2513007 A
- DE 102012221446 A1
- DE 102010051818 B3
- EP 0508183 A1
- EP 0432087 A1
- DE 102014101861
- DE 19956509
- WO 02079341 A
- WO 02079293 A
- DE 102013114061
- DE 102011078785
- DE 102014105202


### In der Beschreibung aufgeführte Nicht-Patentliteratur


- **BECKER, G.W. ; BRAUN ; OERTEL, G.** Polyurethane Kunststoff-Handbuch. Carl Hanser Verlag, 1993, vol. 7